# EUROPÄISCHE PATENTSCHRIFT

(11) **EP 3 224 219 B1**
(45) Veröffentlichungstag und Bekanntmachung des Hinweises auf die Patenterteilung: **17.06.2020**
(21) Anmeldenummer: 15823592.9
(22) Anmeldetag: 17.11.2015
(51) Int. Cl.: C04B 7/02, C04B 7/12, C04B 7/13, C04B 28/02, C04B 14/04, C04B 28/04, C04B 28/06

(54) **KLINKERERSATZMATERIAL AUS ALUMINIUMSILIKAT UND DOLOMIT**
CLINKER REPLACEMENT MATERIAL MADE OF ALUMINIUM SILICATE AND DOLOMITE
MATÉRIAU DE REMPLACEMENT DE CLINKER EN SILICATE D'ALUMINIUM ET DOLOMITE

(30) Priorität: 24.11.2014 EP 14003967
(43) Veröffentlichungstag der Anmeldung: 04.10.2017
(73) Patentinhaber: HeidelbergCement AG, 69120 Heidelberg (DE)
(72) Erfinder: BULLERJAHN, Frank, 69181 Leimen (DE); ZAJAC, Maciej, 69126 Heidelberg (DE); NIED, Dominik, 76661 Philippsburg (DE)
(74) Vertreter: Zellentin & Partner mbB Patentanwälte
(86) Internationale Anmeldenummer: PCT/EP2015/002549
(87) Internationale Veröffentlichungsnummer: WO 2016/082936

(56) Entgegenhaltungen:
- EP-A1- 0 397 963
- EP-A2- 1 160 218
- DE-C- 608 485
- GB-A- 191 401 438
- INTAS BARBANE ET AL: "Low-temperature Hydraulic Binders for Restoration Needs", MATERIAL SCIENCE AND APPLIED CHEMISTRY, Bd. 28, Nr. 28, 18. Oktober 2013 (2013-10-18), Seite 5, XP055190953, ISSN: 1407-7353, DOI: 10.7250/msac.2013.001 in der Anmeldung erwähnt

## Beschreibung

Die vorliegende Erfindung betrifft die Herstellung eines neuartigen puzzolanischen bzw. latent-hydraulischen Klinkerersatzmaterials, im folgenden auch kurz SCM (vom englischen supplementary cementitious material) genannt, und Bindemittel, welche dieses im Gemisch mit Zement, insbesondere Portlandzement, enthalten.

Zement und hier vor allem Portlandzement, im folgenden kurz OPC (vom englischen ordinary portland cement) ist einerseits ein wichtiges Baumaterial, andererseits benötigt seine Herstellung große Mengen Energie und mineralische Rohstoffe. Daher wird schon lange versucht, sowohl den Energie- als auch den Rohstoffbedarf zu senken wie z.B. durch den Einsatz von Neben- und Abfallprodukten.

Der Ersatz von Portlandzementklinker durch SCM eignet sich besonders gut, um diese Ziele zu erreichen. Einerseits senken SCM den Rohstoffeinsatz, da es sich bei ihnen häufig um Neben- und Abfallprodukte handelt. So gehören Hüttensand und Flugasche zu den am meisten verwendeten SCM. Andererseits reduziert die Verringerung des Klinkergehaltes die für dessen Herstellung benötigte Energie, da SCM weniger Energie zur Herstellung benötigen als Klinker.

Allerdings eignen sich längst nicht alle Neben- und Abfallprodukte als SCM. Die puzzolanische bzw. latent-hydraulische Reaktivität darf nicht zu gering sein, da ansonsten die Eigenschaften des aus dem Zement und SCM erzeugten Baumaterials leiden. Beispielsweise kann kalzinierter Ton nur dann als SCM eingesetzt werden, wenn er eine hohe mineralogische Reinheit aufweist, idealerweise aus nur einem Tonmineral besteht. Der Gehalt an Aluminiumoxid und das Al₂O₃/SiO₂ Verhältnis sollten hoch sein. Die Aktivierung durch Kalzinieren erfordert zudem die Einhaltung eines engen Temperaturfensters, sowie möglichst kurze Kalzinierzeiten, bis hinab zu Sekunden. Da Ton eine hohe Absorption und Feinheit aufweist, wird z.B. für Beton aus Zement und einem solchen SCM eine große Menge Verflüssiger benötigt, um den erhöhten Wasseranspruch zu kompensieren. Zusatzmittel können an der Oberfläche und in den Tonzwischenschichten ad- bzw. absorbiert werden, was höhere Einsatzmengen nötig macht.

In der Praxis sind qualitativ hochwertige, aus wenigen oder nur einer Phase bestehende Tone selten und daher wegen der Konkurrenz mit anderen Industriezweigen zu teuer. Bei Mischungen ist es aber schwierig, eine optimale Temperatur beim Kalzinieren einzustellen, bzw. die verschiedenen optimalen Temperaturen für verschiedene Bestandteile erlauben es nicht, das gesamte Ausgangsmaterial zu aktivieren. Ist die Temperatur zu niedrig, werden zu kleine Mengen aktiviert. Bei etwas höheren Temperaturen aktiviert man nur die Phasen, die schon bei diesen geringeren Temperaturen reagieren, was meist ein immer noch zu kleiner Anteil ist. Bei mittleren Temperaturen wird zwar in der Regel ein ausreichender Anteil aktiviert, aber einige Anteile des Ausgangsmaterials bilden schon kristalline und damit inerte Phasen. Bei hohen Temperaturen werden zwar (fast) alle Anteile des Ausgangsmaterials umgesetzt, dafür bilden aber auch die meisten Anteile bereits inerte, kristalline Phasen. Die verschiedenen Tonminerale haben folgende optimale Kalziniertemperaturen:
- Serpentinite 400 bis 500°C,
- Palygorskit 600 bis 800°C,
- Kaolinite 600 bis 800°C,
- Halloysit 600 bis 800°C,
- Pyrophyllit 750 bis 950°C,
- Montmorillonit 800 bis 950°C,
- Illite 800 bis 1000°C,
- Glimmer 650 bis 1000°C.

Nicht umgesetzte Phasen haben einen besonders hohen Wasseranspruch, so dass sie möglichst vermieden werden müssen. Viele Ausgangsmaterialien haben auch einen zu geringen Al₂O₃ Gehalt, dafür aber viel SiO₂ und andere Bestandteile wie Fe₂O₃, CaO, MgO, Na₂O und K₂O. Aus diesem Grunde können viele Tone nicht wirtschaftlich genutzt werden und Ton-enthaltende bzw. -reiche Materialien müssen unter Umständen deponiert werden.

Es hat schon Vorschläge gegeben, solche Tone durch hydrothermale Behandlung oder durch Kalzinieren im Gemisch mit Kalkstein bzw. durch Kombination mit Kalkstein als SCM nutzbar zu machen, siehe beispielsweise EP 2 253 600 A1 und US 5,626,665. In der Doktorarbeit Tobias Danner, "Reactivity of calcined clays", ISBN 978-82-471-4553-1 wurde aufgezeigt, dass es keinen Einfluss auf die Reaktivität des kalzinierten Materials hat, wenn Kalkstein bereits im Ausgangsmaterial vorhanden ist oder diesem vor dem Brennen zugesetzt wird. In dieser Studie wurde weiterhin festgestellt, dass das Material mit dem höchsten MgO-Gehalt, entstammend aus Magnesiumsilikat-Verbindungen (d.h. nicht aus Magnesiumkarbonat oder Dolomit bis dolomitischer Kalkstein), nicht ausreichend aktiviert werden konnte, um als SCM eingesetzt zu werden, in anderen Worten die geringste puzzolanische Reaktivität aufweist. Ebenfalls hat diese Studie gezeigt, dass das Kalk-Bindevermögen (in anderen Worten, die puzzolanische Reaktivität) der untersuchten Materialien bei 700 bis 800°C Brenntemperatur sein Maximum erreicht und schon bei leicht höheren Temperaturen von über 800°C, z.B. 850°C, das Material sehr massiv an Reaktivität verliert. D.h., höhere Temperaturen führten zu Materialien mit nur sehr niedriger bis gar keiner Reaktivität. Dieses Verfahren konnte folglich die Probleme bei Tonen mit gemischten Phasen, die sehr unterschiedliche Kalziniertemperaturen benötigen, nicht lösen. Des weiteren ist in der Studie kein positiver Effekt, des in sehr geringen Gehalten vorliegendem Dolomit zu erkennen, da dieser nicht in ausreichenden Mengen zugesetzt wurde und auch zu niedrige Brenntemperaturen verwendet wurden. Ein Fachmann kann dieser Arbeit einen synergetischen Effekt der gemeinsamen Kalzinierung von Dolomit bis dolomitischer Kalkstein zusammen mit einem Ton, und einen Einsatz des erhaltenen Materials als SCM nicht entnehmen.

Ein weiteres für die Zementklinkerherstellung und als SCM nicht verwertbares Material ist Dolomit. MgO kann nur bis zu einer Menge von wenigen Prozent in Portlandklinker eingebaut werden, ein darüber hinausgehender Anteil im Rohmehl liegt nach dem Brennen als "totgebranntes" MgO vor. Solches MgO reagiert sehr langsam, in großen Teilen erst nach Jahren, mit Wasser, bildet dann aber Mg(OH)₂, welches ein größeres Volumen als MgO hat und daher den Zementstein zerstört. Auch als SCM darf Dolomit nicht immer verwendet werden, weil es sich zum Teil löst, dabei CO₂ freisetzt und unter bestimmten Umständen Mg(OH)₂ bildet. Das CO₂ bildet seinerseits aus Ca²⁺ Calcit. Diese Reaktionen führen ebenfalls zu einer Volumenänderung, welche zu einer Rissbildung und zur Zerstörung des Zementsteines führen kann.

Ein Ansatz zur Nutzbarmachung von Dolomit (und Kalkstein) ist ein Brennen zur direkten Verwendung als Luftkalk / Branntkalk / gelöschter Kalk oder als hydraulisches Bindemittel, z.B. als sog. Roman Cement. Verschiedene Autoren haben dazu die Reaktionsprodukte einer Kalzinierung von Tonen mit einem Gehalt an Kalkstein oder Dolomit bzw. von Gemischen aus Ton und Kalkstein bzw. Dolomit untersucht, wobei aber nur ein Einsatz der Produkte als hydraulisches Bindemittel oder die Herstellung von Keramik betrachtet wurden. Siehe A.L. Burwell, Mineral Report 28 in "The Henryhouse Marlstone in the Lawrence uplift, Pontotoc county, Oklahoma and its commercial possibilities" und M.J. Trindade et al, "Mineralogical transformations of calcareous rich clays with firing: A comparative study between calcite and dolomite rich clays from Algarve, Portugal", Applied Clay Science 42, (2009), S. 345-355. Eine Eignung als SCM wird in diesen Arbeiten nicht angesprochen und ist für die überwiegende Zahl der Produkte auch nicht sinnvoll, wie Vergleichsversuche gezeigt haben.

Eine weitere Studie zur Nutzbarmachung von Ton-Material von geringer Qualität als SCM beinhaltet auch ein MgO-reiches Rohmaterial, welches in Spuren Dolomit enthält, siehe G. Habert, "Clay content of argillites: Influence on cement based mortars", Applied Clay Science 43 (2009) 322. Der überwiegende MgO Anteil ist nicht im Dolomit gebunden, sondern liegt in Form von Tonmineralien (Palygorskite und Montmorillonit: ∑ 69%) vor. Nur ein geringer, rechnerischer Anteil von weniger als 1% MgO kann als Karbonat vorliegen, was einer maximalen Menge von 5% reinem Dolomit entspricht. Die Studie zeigt ebenfalls auf, dass Brenntemperaturen von über 800°C zu einer deutlichen Verringerung der Reaktivität führten bzw. das Material nur noch als inerter Füllstoff vorlag.

Eine weitere Studie (I. Barbane et al. 2013, "Low-temperature Hydraulic Binders for Restoration Needs", Material Science and Applied Chemistry, Vol. 28) beschreibt die Herstellung sowie die Materialeigenschaften eines hydraulischen Kalkes auf Basis von Dolomit und Ton. Das Ziel ist die Herstellung eines Systems mit maximaler Menge an Dolomit und möglichst geringen Gehalten an Ton. Die festigkeitsbildende Reaktion wird hauptsächlich der Hydratation von CaO und MgO, zur Umsetzung zu Ca(OH)₂ und Mg(OH)₂ und ebenfalls, aber in geringerem Umfang, einer puzzolanischen Reaktion zugeschrieben. Entsprechend diesem Dokument sind höhere Gehalte an Ton, und entsprechend geringere Gehalte an Dolomit oder Kalkstein, nicht anzustreben, da dies zu einer verringerten Festigkeitsentwicklung führen würde. Eine Kombination z.B. mit OPC wird nicht dargestellt und ist für den Fachmann ebenfalls nicht als vorteilhaft ersichtlich, da z.B. die Hydratation von OPC schon große Mengen an Ca(OH)₂ bereitstellt.

Eine weitere Studie (L. Lindina et al. 2006, "Formation of calcium containing minerals in the low temperature dolomite ceramics", Conference on Silicate Materials, Materials Science and Engineering, Vol. 25) beschreibt die Herstellung und den Einsatz eines hydraulischen Bindemittels basierend auf natürlichen Mischungen von Kalkstein, Dolomit und Ton. Die Studie zeigt, dass die optimale Brenntemperatur im Bereich um 750°C liegt. Schon bei 800°C kommt es zu einer deutlichen Verminderung der Reaktivität. Dem Fachmann erschließt sich hieraus, dass Brenntemperaturen von weniger als 800°C anzustreben sind. Eine Kombination z.B. mit OPC wird nicht dargestellt und ist für den Fachmann ebenfalls nicht als vorteilhaft ersichtlich.

In den genannten Studien werden Mischungen mit einer möglichst hohen Menge (mindestens mehr als 70%, typischerweise mehr als 80%) an Kalkstein bzw. in seltenen Fällen Dolomit und nur in geringen Mengen toniges Material (weniger als 30%, typischerweise weniger als 20%) verwendet. Das nach diesen Verfahren hergestellte Material führt in Kombinationen mit OPC nicht zu einer Verbesserung der Festigkeitsentwicklung.

EP 397 963 A1 beschreibt hydraulische Bindemittel aus gebranntem Ölschiefer, die durch wenigstens eine Verbindung ausgewählt aus der Gruppe bestehend aus
- mindestens einem Oxid 3- und/oder 4-wertiger Kationen,
- einem amorphen Hydroxid 3- und/oder 4-wertiger Kationen, und
- einem Aluminat 1- und/oder 2-wertiger Kationen,
angeregt werden und wenigstens ein wasserreduzierendes Mittel enthalten. Aus der GB 1438 ist es bekannt, durch Brennen von Ton im Gemisch mit Kalkstein, Kalk, Dolomit, Magnesit, Wiesenkalk oder Mergel bei Temperaturen um 800 °C aber unterhalb der Sintertemperatur ein SCM herzustellen, wobei ein Flussmittel wie Calciumchlorid zugefügt werden soll. Das Produkt soll ausdrücklich nicht gesintert sein, nur CO₂ wird ausgetrieben, und es erhärtet im Gemisch mit Kalk.

Auch andere natürliche und künstliche Materialien, die wie Puzzolane Aluminiumsilikate enthalten, zeigen eine für die Verwendung als SCM (zu) geringe puzzolanische Reaktivität.

Es besteht daher weiterhin Bedarf an Materialien bzw. Verfahren zur Aktivierung von Aluminiumsilikaten, insbesondere von Ton und ton-haltigen Materialien und anderen Materialien von geringer puzzolanischer Qualität, so dass diese als SCM geeignet sind.

Überraschend wurde nun gefunden, dass durch ein gemeinsames Brennen mit Dolomit oder Magnesiumcarbonat-haltigen Materialien auch aus für andere Zwecke schlecht oder nicht geeignetem Ton, ton-haltigem Material und Puzzolanen von geringer Qualität reaktive SCM erhalten werden können.

Die Erfindung löst daher die obige Aufgabe durch ein Verfahren zur Herstellung von Klinkerersatzmaterial, bei dem ein Ausgangsmaterial, welches eine Aluminiumsilikat-Komponente und eine Dolomit-Komponente enthält, bereitgestellt und im Temperaturbereich von 850 °C bis maximal 1100 °C gebrannt wird. Die Aufgabe wird weiter durch ein Bindemittel gelöst, welches Zement und das erfindungsgemäße Klinkerersatzmaterial enthält.

Erfindungsgemäß wird aus Aluminiumsilikat und Dolomit ein reaktives SCM erhalten, so dass zum einen qualitativ hochwertige Materialien noch weiter verbessert werden und als besonderer Vorteil ansonsten nicht oder nur schwer nutzbare Materialien vorteilhaft verwendet werden können. Das Ausgangsmaterial wird entweder von der Natur bereitgestellt oder gezielt durch Mischen und ggfs. gemeinsames Vermahlen erzeugt, im Temperaturbereich von 850 bis 1100 °C gebrannt, abgekühlt und ggfs. gemahlen.

Um die weitere Beschreibung zu vereinfachen, werden folgende in der Zementindustrie üblichen Abkürzungen verwendet: H - H₂O, C - CaO, A - Al₂O₃, F - Fe₂O₃, M - MgO, S - SiO₂ und $ - SO₃. Außerdem werden zumeist Verbindungen in ihrer reinen Form angegeben, ohne explizite Angabe von Mischreihen / Substitution durch Fremdionen usw. wie sie in technischen und industriellen Materialien üblich sind. Wie jeder Fachmann versteht, kann die Zusammensetzung der in dieser Erfindung namentlich genannten Phasen, in Abhängigkeit vom Chemismus des Ausgangsmaterials und der Art der Herstellung, durch die Substitution mit diversen Fremdionen variieren, wobei solche Verbindungen ebenfalls zum Gegenstand der vorliegenden Erfindung gehören und, falls nichts anderes angegeben ist, von den in reiner Form benannten Phasen umfasst sind.

Soweit nichts anderes angegeben ist, ist mit "reaktiv" eine hydraulische, latent-hydraulische oder puzzolanische Reaktivität gemeint. Ein Material ist hydraulisch reaktiv, wenn es in fein gemahlener Form nach Mischung mit Wasser durch Hydratation erhärtet, wobei das erhärtete Produkt seine Festigkeit und Dauerhaftigkeit an Luft und unter Wasser behält. Ein Material besitzt latent-hydraulische Reaktivität, wenn es nach Mischen mit Wasser in der Lage ist hydraulisch zu erhärten, aber für eine Umsetzung innerhalb technisch bzw. wirtschaftlich brauchbarer Zeit eine Anregung benötigt. Ein Material ist puzzolanisch reaktiv, wenn es nach Mischen mit Wasser bei Zimmertemperatur nur erhärten kann, wenn ein Anreger zugesetzt wird, beispielsweise ein Alkali- oder Calciumhydroxid. OH⁻ greift das Al₂O₃-SiO₂-Netzwerk an, so dass Bindungen zwischen Sauerstoff und den Netzwerkatomen gelöst werden und Calciumsilikathydrate (C-S-H) oder Calciumaluminathydrate (C-A-H) als Festigkeits-bildende Phasen entstehen. Ein strenge Unterscheidung zwischen latent-hydraulischer und puzzolanischer Reaktivität erfolgt häufig nicht, da viele Materialien beide Reaktivitäten aufweisen.

Im Rahmen der vorliegenden Erfindung meint Klinker ein Sinterprodukt, welches durch Brennen eines Ausgangsmaterials bei erhöhter Temperatur erhalten wird und zumindest eine hydraulisch reaktive Phase enthält. Brennen meint die Aktivierung durch Veränderungen einer oder mehrerer der Eigenschaften Chemismus, Kristallinität, Phasenzusammensetzung, dreidimensionale Anordnung und Bindungsverhalten der Gerüstatome durch die Zufuhr von thermischer Energie. Das Ausgangsmaterial kann im Einzelfall auch ein einzelner Rohstoff sein, wenn dieser alle gewünschten Substanzen in der richtigen Relation enthält, das ist aber die Ausnahme. Das Ausgangsmaterial kann auch Mineralisatoren enthalten. Als Mineralisatoren werden Stoffe bezeichnet, welche als Flussmittel wirken und/oder die Temperatur senken, die zur Bildung einer Schmelze notwendig ist, und /oder solche, die die Bildung der Klinkerverbindung fördern, wie zum Beispiel durch Mischkristallbildung und/oder Phasenstabilisierung. Mineralisatoren können im Ausgangsmaterial als Bestandteil enthalten sein oder gezielt zugefügt werden.

Mit Zement wird ein mit oder ohne Zusatz weiterer Komponenten gemahlener Klinker bezeichnet, aber auch andere hydraulisch erhärtende Materialien und Mischungen, beispielsweise aber nicht ausschließlich Sulfathüttenzement, Geopolymerzement und durch hydrothermale Umsetzung erhaltener Belitzement. Bindemittel oder Bindemittelmischung bezeichnet ein in Kontakt mit Wasser hydraulisch erhärtendes Material, welches Zement enthält und typischerweise aber nicht zwingend weitere, fein gemahlene Komponenten. Das Bindemittel gelangt nach Zusatz von Wasser, meist auch Gesteinskörnung und ggfs. Zusatzmitteln, zur Anwendung.

Klinkerersatzmaterial oder SCM bezeichnet ein puzzolanisches und/oder latent-hydraulisches Material, das in einem Zement bzw. einem Bindemittel zumindest einen Teil des Klinkers ersetzt. Latent-hydraulische Materialien weisen eine Zusammensetzung auf, die in Kontakt mit Wasser eine hydraulische Erhärtung ermöglicht, wobei typischerweise für eine Erhärtung in technisch nutzbaren Zeiträumen ein Anreger nötig ist. Mit Anreger oder Aktivator ist ein Material gemeint, welches die Erhärtung von latent-hydraulischen Materialien beschleunigt. Es kann sich um einen Zusatz handeln, etwa Sulfat oder Calcium(hydr)oxid und/oder um Produkte der hydraulischen Reaktion des Zements, z.B. setzen Calciumsilkate bei der Erhärtung Calciumhydroxid frei, welches als Anreger wirkt. Im Unterschied dazu sind Puzzolane oder puzzolanische Materialien natürliche oder industriell hergestellte Stoffe, wie z.B. kalkarme Flugaschen, die reaktives SiO₂ alleine oder auch zusammen mit Al₂O₃ und/oder Fe₂O₃ enthalten, aber nicht selbstständig mit Wasser durch Bildung von Calcium(aluminium)silikathydrat- und/oder Calciumaluminat(ferrat)phasen erhärten können. Puzzolane enthalten entweder kein oder nur sehr wenig CaO. Sie benötigen deshalb, im Gegensatz zu den latent-hydraulischen Materialien, für ein hydraulisches, auf der Bildung von Calciumsilicathydraten beruhendes Erhärten, zwingend einen Zusatz von CaO oder Ca(OH)₂. Das Klinkerersatzmaterial oder SCM kann auch ein von sich aus hydraulisches Material darstellen, wenn dieses in ausreichenden Mengen Freikalk und Periklas und/oder reaktive Klinkerphasen zusammen mit puzzolanischem und oder latent-hydraulischen Materialien enthält. In der Praxis ist die Grenze zwischen hydraulischen, latent-hydraulischen und puzzolanischen Materialien oft fließend, z.B. können Flugaschen je nach Mineralogie und Gehalt an Calciumoxid puzzolanische oder latent-hydraulische bis hin zu hydraulischen Materialien sein. Mit SCM sind sowohl latent-hydraulische als auch puzzolanische Materialien gemeint. Von den SCM zu unterschieden sind unreaktive, mineralische Zusätze, wie Gesteinsmehl, welche an der hydraulischen Umsetzung des Bindemittels keinen Anteil haben. In der Literatur werden teilweise SCM gemeinsam mit solchen Zusätzen als mineralische Zusätze zusammengefasst.

Ein Klinker kann bereits alle notwendigen bzw. gewünschten Phasen enthalten und nach Vermahlen zu Zement direkt als Bindemittel zum Einsatz kommen. Häufig wird die Zusammensetzung des Bindemittels durch Vermischen von Zement und weiteren Komponenten, erfindungsgemäß zumindest dem Klinkerersatzmaterial, erhalten und auch zwei oder mehrere Klinker und/oder Zemente sind möglich. Das Vermischen erfolgt bereits vor (oder während) dem Mahlen und/oder im gemahlenen Zustand und/oder bei der Herstellung des Bindemittels. Soweit nicht ausdrücklich ein Zeitpunkt des Vermischens genannt ist, beziehen sich die folgenden Beschreibungen auf Bindemittel (und Zemente), die in dieser Beziehung nicht beschränkt sind.

Erfindungsgemäß wird ein SCM durch Brennen der Mischung enthaltend Aluminiumsilikat sowie Dolomit erhalten. Dabei wird auch aus sonst nicht oder schlecht verwendbaren Materialien, die bisher als Baumaterial kaum nutzbar waren, ein (sehr) reaktives SCM erhalten oder sogar ein Klinker generiert. Durch den Ersatz von Zementklinker werden Rohstoffe für diesen und vor allem Energie gespart, da die erfindungsgemäßen SCM geringere Brenntemperaturen als Zementklinker für Portlandzement oder Calciumsulfoaluminatzement benötigen.

Ein weiterer überraschender Vorteil ist die rasche Umsetzung des im erfindungsgemäßen SCM enthaltenen MgO. Eine vollständige Hydratation von MgO findet meistens innerhalb der ersten 1 bis 7 Tage statt, wobei spätestens nach 28 Tagen kein MgO bzw. nur noch Spuren (< 1%) nachweisbar sind. Das Material kann ebenfalls so eingestellt werden, dass das autogene Schwinden zumindest teilweise durch die Umwandlung und Volumenzunahme von MgO zu Mg(OH)₂ kompensiert und ein potentielles Auftreten von Schwindrissen minimiert bzw. vermieden wird. Dieser Prozess tritt in den ersten Tagen der Hydratation auf und ist spätestens mit dem vollständigen Umsatz von MgO abgeschlossen.

Das Ausgangsmaterial soll, glühverlustfrei gerechnet, vorzugsweise mindestens 10 Gew.-% MgO und mindestens 15 Gew.-% Al₂O₃ enthalten. Besonders bevorzugt sind mindestens 12 Gew.-% MgO enthalten, wobei der (Haupt-)Anteil des MgO aus der Dolomit-Komponente stammt, d.h. als Karbonat vorliegen soll. Mindestens sind 15 Gew.-% Al₂O₃, insbesondere mindestens 20 Gew.-% Al₂O₃ enthalten. Außerdem sollten mindestens 15 Gew.-% SiO₂, bevorzugt mindestens 25 Gew.-% SiO₂ und insbesondere mindestens 40 Gew.-% SiO₂ enthalten sein.

Der Einfachheit halber wird von Ausgangsmaterial gesprochen, wobei dieser Begriff sowohl durch Mischen erzeugte Materialien umfasst als auch Materialien, die von sich aus die gewünschten Bestandteile in den benötigten Mengen enthalten. Sofern ein Ausgangsmaterial nicht die gewünschten Mengen MgO, Al₂O₃ und SiO₂ enthält, wird eine Mischung verwendet. In der Regel sind Ausgangsmaterialien, die 40 bis 80 Gew.-%, vorzugsweise 50 bis 70 Gew.-% und insbesondere 55 bis 65 Gew.-% Aluminiumsilikat-Komponente sowie von 20 bis 60 Gew.-%, vorzugsweise 30 bis 50 Gew.-% und insbesondere 35 bis 45 Gew.-% Dolomit-Komponente enthalten gut geeignet.

Das Gewichtsverhältnis von Al₂O₃+SiO₂ zu MgO+CaO des Ausgangsmaterials liegt im Bereich von 0,7 bis 6, bevorzugt im Bereich von 1,1 bis 4 und insbesondere im Bereich von 1,5 bis 2,9. Mit anderen Worten, im Gegensatz zu den für RomanCement genutzten Rohstoffgemischen, die in der Regel Rohstoffe mit einem Gewichtsverhältnis Al₂O₃+SiO₂ zu CaO(+MgO) von < 0,5 nutzen, sollte für das erfindungsgemäße Verfahren im Ausgangsmaterial bevorzugt mehr Aluminiumsilikat als Dolomit vorliegen.

Im Rahmen der vorliegenden Erfindung meint Dolomit-Komponente ein Material, welches Calciummagnesiumcarbonat (CaMg(CO₃)₂) enthält. Geeignet sind Materialien mit einem Gehalt an Calciummagnesiumcarbonat von mindestens 20 Gew.-%, insbesondere über 50 Gew.-% und am meisten bevorzugt über 80 Gew.-%. Somit sind die Carbonatgesteine Dolomit und dolomitischer Kalkstein besonders bevorzugt. Des weiteren kann die Dolomit-Komponente andere Karbonate wie z.B. Magnesit, Barringtonit, Nesquehonit, Lansfordit, Hydromagnesit, Calcit, Vaterit, Ankerit, Huntit und Aragonit enthalten. Als Dolomit-Komponente eignen sich alle Materialien natürlichen oder künstlichen Ursprungs, die Calciummagnesiumcarbonat in geeigneter Menge enthalten. Bevorzugt sind dabei neben Calciummagnesiumcarbont solche Mg- und/oder Ca-haltigen Carbonate, die sich im Temperaturbereich von 600 bis 1000 °C, bevorzugt von 700 bis 950 °C, umsetzen.

Dabei ist es besonders günstig, wenn die Zersetzungs- bzw. Umsetzungstemperatur der Dolomit-Komponente mit der der Aluminiumsilikat-Komponente abgestimmt wird. Es ist also günstig, wenn die Zersetzungs- bzw. Umsetzungstemperaturen etwa im gleichen Bereich liegen. Beispielsweise sollte die Zersetzung/Umsetzung der Dolomit-Komponente bei derselben Temperatur oder um bis zu 50 °C höher oder vorzugsweise tiefer als die der Aluminiumsilikat-Komponente erfolgen.

Aluminiumsilikat bezeichnet im Rahmen der Erfindung Minerale und synthetische Materialien, die Al₂O₃ und SiO₂ enthalten. Als Aluminiumsilikat-Komponente eignen sich Mineralien, natürliche Neben- und Abfallprodukte, aber auch industrielle Neben- und Abfallprodukte, die in ausreichenden Mengen SiO₂ und Al₂O₃ zur Verfügung stellen und zumindest teilweise hydratisiert und/oder karbonatisiert vorliegen. Die Aluminiumsilikat-Komponente sollte glühverlustfrei gerechnet mehr als 12 Gew.-% Al₂O₃, bevorzugt mindestens 20 Gew.-% Al₂O₃, insbesondere mindestens 30 Gew.-% Al₂O₃, enthalten sowie von 25 bis 65 Gew.-% SiO₂, bevorzugt von 35 bis 55 Gew.-% SiO₂ und insbesondere von 40 und 50 Gew.-% SiO₂. Glühverlustfrei bezeichnet Proben, die bei 1050 °C kalziniert wurden. Die Aluminiumsilikat-Komponente enthält typischerweise Vertreter verschiedener Minerale, wie zum Beispiel, aber nicht ausschließlich, aus der Gruppe der Tone, Glimmer, Amphibole, Serpentine, Karpholithe, Staurolithe, Zeolithe, Allophane, Topase, Feldspäte, Al- und Fe-enthaltender Hydroxide und anderer natürlicher Puzzolane, Laterite und Saprolithe. Es können auch Aluminiumsilikat-Komponenten mit mehr als 40 Gew.-% Al₂O₃ eingesetzt werden. Besonders bevorzugt werden Materialen geringer Qualität verwendet, d.h. solche, die für andere Einsatzzwecke (wie z.B. als SCM "kalzinierter Ton" hergestellt entsprechend dem aktuellen Stand der Technik) nicht oder schlecht geeignet sind. Material von geringer Qualität bezeichnet Aluminiumsilikate, wie Puzzolane und Tone, die durch einen Brennprozess nicht in ausreichendem Maße aktiviert werden können um z.B. den Qualitätsanforderungen wie sie z. B. für Flugaschen in EN 450-1 definiert sind, zu genügen. Des weiteren sind unter Material geringer Qualität solche Materialien zu verstehen, die aus komplexen Mineralmischungen bestehen, wobei zum Beispiel Phasen mit deutlich unterschiedlichen optimalen Kalzinierungstemperaturen nebeneinander vorliegen. Diese Materialien sind oft ein Gemenge von Phasen, wie z.B. verschiedenen Tonmineralen, Glimmern und z.B., aber nicht ausschließlich, anderen natürlichen Aluminiumsilikaten und - hydroxiden, mit zum Teil sehr unterschiedlichen optimalen Temperaturen für das Kalzinieren. Gegebenenfalls können auch synthetische Ausgangsstoffe eingesetzt werden, insofern diese vergleichbare Zusammensetzungen und Eigenschaften aufweisen. Außerdem wurde überraschenderweise gefunden, dass auch für Materialien ausreichender Qualität (Materialien, die von sich aus oder aber durch thermische Behandlung im Temperaturbereich von 600 bis 900°C reaktive Puzzolane darstellen und somit den Anforderungskriterien, wie sie z.B. in der EN 450-1 für Flugaschen definiert sind, genügen) die Reaktivität durch das erfindungsgemäße Verfahren verbessert werden kann.

Ton und Ton-haltige Materialien sind als Aluminiumsilikat-Komponente besonders bevorzugt. Mit Ton und Ton-haltige Materialien sind im Rahmen der Erfindung Materialien gemeint, welche vorrangig Tonminerale enthalten, d.h. Schichtsilikate mit Schichten aus Si04-Tetraedern und Schichten aus AlO₆-Oktaedern. Die Tetraeder- sowie Oktaederschichten weisen üblicherweise weitere Elemente auf, die Si und oder Al teilweise substituieren. In der Regel handelt es sich bei den Tonen und Ton-haltigen Materialien um feinkörnige bis feinstkörnige Materialien mit Partikelgrößen unter 4 µm oder unter 2 µm oder unter 1 µm. Im Rahmen der Erfindung ist das jedoch nicht zwingend, es können auch chemischmineralogisch gleiche Materialien mit größeren Partikelgrößen verwendet werden. Tone können weitere Materialien enthalten und Ton-haltige Materialien enthalten solche. Von der Erfindung profitieren insbesondere solche Tone, Ton-haltige Materialien und synthetische Materialien analogen Aufbaus, die sehr verschiedene Phasen enthalten und von sich aus nicht oder zu wenig reaktiv sind.

Als Ausgangsmaterial kommen neben Gemischen von Aluminiumsilikat-Komponente und Dolomit-Komponente wie oben beschrieben außerdem Mergel (Mischungen aus Ton und Kalkstein/Dolomit) in Betracht. Soweit diese einen ausreichenden Gehalt an MgO, gebunden als Karbonat, aufweisen, sind sie als alleiniger Rohstoff geeignet. Mergel mit hohem Gehalt an CaO sollten dagegen nur in geringen Mengen eingesetzt werden, damit der Gehalt an CaO im Ausgangsmaterial, glühverlustfrei gerechnet, möglichst gering ist. Bevorzugt sind maximal 40 Gew.-%, insbesondere weniger als 30 Gew.-% und besonderes bevorzugt weniger als 20 Gew.-%.

Ohne an diese Theorie gebunden sein zu wollen wird angenommen, dass Dolomit und analog zusammengesetzte Materialien beim Kalzinieren schon bei niedrigeren Temperaturen als z.B. Kalkstein zersetzt werden und dadurch aus Silizium sowie Aluminium reaktive Silikate und Aluminate gebildet werden können, so dass sich keine oder weniger inerte, kristalline Phasen, wie z.B. Mullit, bilden.

Die Temperatur beim Brennen beträgt von 850 bis 1100 °C, bevorzugt wird die Mischung bei 850 bis 1000 °C gebrannt, besonders bevorzugt bei 850 bis 975 °C. Im Gegensatz zum Kalzinieren von Tonen entsprechend dem Stand der Technik (setzt zwingend die Einhaltung eines engen Temperaturbereiches voraus), können sehr weite Temperaturbereiche, unter anderem auch sehr hohe Temperaturen (> 900°C), genutzt werden. Das SCM zeigt auch bei diesen hohen Temperaturen noch eine sehr hohe und überraschenderweise zum Teil die höchste Reaktivität.

Das Ausgangsmaterial kann vor dem Brennen wenn nötig zerkleinert und im Falle von Ausgangsmaterialmischungen gut gemischt werden, beispielsweise durch gemeinsames Mahlen. Es ist aber auch möglich nur gebrochenes Material einzusetzen. Als vorteilhaft hat sich eine Ausgangsmaterialfeinheit von 2000 bis 10000 cm²/g (Blaine), vorzugsweise von 3000 bis 7000 cm²/g erwiesen. Gut geeignete Partikelgrößen (Lasergranulometrie) lagen im Bereich von einem d₉₀ < 200µm, vorzugsweise d₉₀ < 100µm und besonders bevorzugt d₉₀ < 60µm. Wie jeder Fachmann versteht, erlauben höhere Feinheiten eine effektivere Kalzinierung (z.B. verringerte Brenntemperatur und/oder verringerte Verweildauer und ein erhöhter Phasenumsatz). Jedoch ist die Mahlung von solch komplexen Mischungen (sehr weiche Materialien (z.B. Ton) mit sehr harten Materialien (z.B. Quarz)) sehr schwierig und oft führt dies ebenfalls zu Problemen beim Einsatz als SCM, durch z.B. den deutlich erhöhten Wasseranspruch. Ein besonderer Vorteil der Erfindung ist die deutlich erhöhte Flexibilität hin zu höheren Temperaturen. Selbst (sehr) grobes Material wird ausreichend umgesetzt und durch die hohen Brenntemperaturen (z.B. > 900°C) wird die spezifische Oberfläche, und entsprechend der Wasseranspruch, deutlich reduziert.

Zum Brennen eignen sich alle üblichen Vorrichtungen, wie zum Beispiel, aber nicht ausschließlich, direkt oder indirekt befeuerte Drehrohröfen, Fließbett- oder Wirbelschichtreaktor, Schacht- und Etagenöfen und "Flash Calciner".

Die Umsetzung, in z.B. aber nicht ausschließlich Drehrohröfen oder Schacht- und Etagenöfen, benötigt typischerweise 5 bis 240 Minuten, bevorzugt 25 bis 120 Minuten und insbesondere 40 bis 75 Minuten und soll auf die Vorrichtung, die Brenntemperatur und die gewünschten Produkteigenschaften angepasst werden. Bei höheren Temperaturen können auch kürzere Zeiten von Vorteil sein, wenn z.B. größtenteils Phasen vorliegen, welche schon bei niedrigen Temperaturen zerstört werden (z.B. Kaolinit).

Die Umsetzung in z.B. aber nicht ausschließlich Fließbett- oder Wirbelschichtreaktoren oder Flash Calcinern benötigt typischerweise 5 bis 300 Sekunden, bevorzugt 10 bis 150 Sekunden und insbesondere 20 bis 100 Sekunden und soll an die Vorrichtung, die Brenntemperatur und die gewünschten Produkteigenschaften angepasst werden.

Es ist möglich, die benötigte Temperatur zu senken, indem man einen oder mehrere Mineralisatoren, beispielsweise aber nicht ausschließlich Borax, Glasabfälle, Eisensalze (z.B. Sulfate, Hydroxide, Carbonate, Fluoride, Nitrate oder Mischungen davon), Alkalisalze (z.B. Sulfate, Hydroxide, (Hydrogen-)Carbonate, Fluoride oder Mischungen davon) und/oder Erdalkalisalze (z.B. Sulfate, Hydroxide, (Hydrogen-)Carbonate, Fluoride oder Mischungen davon), zufügt. Die anzuwendende Temperatur liegt dann im Bereich von 725 bis 950 °C, vorzugsweise von 775 bis 900 °C, insbesondere von 800 bis 875 °C. Typischerweise werden ≤ 4 Gew.-%, vorzugsweise ≤ 3 Gew.-% und besonders bevorzugt ≤ 2 Gew.-% Mineralisatoren zugefügt. Häufig reichen Verunreinigungen in den Rohstoffen.

Die Mineralisatoren werden so gewählt, dass sie die Bildung von reaktiven Phasen fördern. Dazu gehören Klinkerphasen wie N_{y}C_{4-y}A₃₋ₓFₓ$, CA, C₁₂A₇, C₃A, C₂S; reaktive (Calcium)Alkalisulfate wie K₂Ca₂(SO₄)₃, K₂SO₄, Na₂Ca(SO₄)₂, Na₂SO₄, K₃Na(SO₄)₂ und Calciumsulfat; sowie inerte, Magnesiumhaltige Minerale in denen Magnesiumoxid (freigesetzt bei der Dolomitzersetzung) gebunden wird, wie Magnesium(Aluminium, Eisen)silikate (z.B. Forsterit, Enstatit, Spinell, etc.).

Ein erfindungsgemäß wichtiger Effekt des Brennens, vor allem bei Temperaturen über 800°C, vorzugsweise über 900°C, ist eine starke Verringerung der Oberfläche der Aluminiumsilikat-Komponente. Durch das Brennen reduziert sich die spezifische Oberfläche (gemessene BET in m²/g) um mindestens 15%, vorzugsweise um mindestens 20% und insbesondere um 30%. Häufig werden 40% oder 50% Reduktion erreicht, teilweise noch mehr. Durch die Verringerung der Oberfläche wird die Ad-beziehungsweise Absorption von Wasser und Zusatzmitteln gesenkt. Damit sinkt der Wasseranspruch, d.h. die zur Einstellung der gewünschten Fließfähigkeit notwendige Menge Wasser, und die benötigten Mengen Zusatzmittel.

Nach dem Brennen wird das erhaltene Klinkerersatzmaterial typischerweise gekühlt. Eine schnelle Abkühlung kann vorgenommen werden, um z.B. eine Phasenumwandlung bzw. Auskristallisation zu vermeiden. Eine schnelle Kühlung ist normalerweise nicht zwingend notwendig. Das Produkt ist ein Sinterprodukt, bei dem das Ausgangsmaterial zumindest zum Teil, vorzugsweise zu mindestens 10 % und insbesondere zu mindestens 20 %, geschmolzen beziehungsweise mineralogisch umgewandelt wurde. Die Phasen unterscheiden sich von denen des Ausgangsmaterials, da sich in Abhängigkeit vom Chemismus und der Brenntemperatur zum Beispiel Kalziumsilikate und Aluminate sowie diverse Magnesiumverbindungen bilden können. Ein Großteil des mineralogisch umgesetzten Phasenbestandes kann indes auch in einer röntgenamorphen Form vorliegen.

Im Gegensatz dazu wird mit dem Begriff Kalzinierung ein Brennen unterhalb der Sintertemperatur beschrieben, bei dem Feststoffe und Mineralpulver, wie z.B. Tone oder Kalksteine, durch Erhitzen entwässert, entsäuert (Freisetzung von CO₂) und/oder zersetzt werden. Durch die Entwässerung und Zersetzung entstehen als Produkte zum Beispiel puzzolanische Materialien wie Metakaolin. In diesem Material liegt Al₂O₃ und SiO₂ in einer größtenteils ungebundenen Form ("freies" Al₂O₃ und SiO₂) vor. Bei zu hohen Brenntemperaturen oder auch Verweildauern kann eine Sinterung einsetzen, was im Falle von Ton zur Bildung von neuen Mineralphasen wie zum Beispiel Mullit (z.B. Al₍₄₊₂ₓ₎Si₍₂₋₂ₓ₎O₍₁₀₋ₓ₎ mit x von 0,17 to 0,59) führt. Dies geht einher mit einer deutlichen Abnahme der Reaktivität bis hin zu einem nicht mehr reaktiven Material. Beim Kalzinieren (Entsäuern) von Karbonaten entstehen Metalloxide wie CaO und MgO als Zersetzungsprodukte. Beim gemeinsamen Kalzinieren von z.B. Kaolin und Kalkstein oder Dolomit entstehen dementsprechend Metakaolin, Freikalk und gegebenenfalls Periklas.

Unter dem Begriff Sintern versteht man einen Prozess, welcher sich häufig an die Kalzinierung anschließt. Durch erhöhte Brenntemperaturen oder auch verlängerte Verweildauern kommt es zu einer Reaktion zwischen vorliegenden oxidischen Komponenten (z.B. CaO oder MgO mit Al₂O₃, Fe₂O₃ und oder SiO₂) und der Bildung neuer, häufig reaktiver, Mineralphasen. Die Mineralphasen können zum Teil (bis 10 %) bis nahezu vollständig (> 90 %) in einer röntgenamorphen Form vorliegen, was auf die geringen Kristallitgrößen oder auch auf eine geringe Kristallinität zurückzuführen ist. Durch gezielte Optimierung der Rohmaterialmischung (z.B. Zugabe von Mineralisatoren oder Korrekturstoffen, wie Al₂(SO₄)₃, Fe₂(SO₄)₃, CaSO₄, Na₂SO₄, usw.) und der Prozessbedingungen (z.B. Materialfeinheit, Temperatur, Verweildauer) lassen sich gezielt mineralische Sinterprodukte, wie zum Beispiel Ye'elimit, Ternesit, Belit, Mayenit, Ferrit und andere, erzeugen. Weiterhin ist es durch die beschriebenen Schritte auch gewünscht und möglich die Bildung einer Schmelzphase zu fördern, dass heisst eine Kombination aus Festphasensintern und Flüssigphasensintern zu nutzen. Beim gemeinsamen Sintern von z.B. Kaolin und Kalkstein oder Dolomit entstehen dementsprechend diverse neue Mineralphasen (z.B. Kalziumaluminate, Kalziumsilikate, Kalziumsulphoaluminate, Kalziumsulphosilikate, Magnesiumsilikate, Magnesiumferrite, Magnesiumaluminate, sowie diverse Mischkristalle), potentiell eine Schmelzphase. Gegebenenfalls sind noch das Puzzolan Metakaolin, Freikalk und Periklas vorhanden.

Das Klinkerersatzmaterial wird zur Verwendung in der Regel auf eine Feinheit von 2000 bis 10000 cm²/g (Blaine), vorzugsweise 3500 bis 8000 cm²/g, und besonders bevorzugt von 3500 bis 8000 cm²/g, gemahlen. Die Mahlung kann separat oder zusammen mit den anderen Zement- und Bindemittelkomponenten erfolgen. Als besonderes geeignet hat sich die gemeinsame Vermahlung erwiesen.

Die spezifische Oberfläche des gemahlenen Klinkerersatzmaterials liegt typischerweise bei einem d₉₀ < 150 µm, bevorzugt bei einem d₉₀ < 90 µm und besonderes bevorzugt bei einem d₉₀ < 60 µm.

Das finale Bindemittel liegt, entsprechend der Herstellung, in typischen Zementfeinheiten vor.

Bei der Mahlung der Rohmehlmischung und/oder des Klinkerersatzmaterials werden vorzugsweise Mahlhilfsmittel verwendet. Die Mahlhilfsmittel sind vorzugsweise, aber nicht ausschließlich, ausgewählt aus der Gruppe der Glykole und Alkanolamine, insbesondere aber nicht ausschließlich Diethanolisopropanolamin (DEIPA), Triisopropanolamin (TIPA), und/oder Triethanolamin (TEA) aber auch aus der Gruppe der Alkyldialkanolamine wie z.B. Methyldiisopropanolamin oder auch Mischungen dieser.

Das erfindungsgemäße Klinkerersatzmaterial kann - wie beispielsweise Flugasche und Hüttensand - als SCM genutzt werden.

Dazu wird es mit Zement zu einem Bindemittel kombiniert. Klinkerersatzmaterial und Zement können getrennt oder gemeinsam, mit oder ohne Sulfat gemahlen werden. Das Bindemittel kann außerdem Zusatzmittel und/oder Zusatzstoffe enthalten, die an sich bekannt sind und in den üblichen Mengen eingesetzt werden.

Als Zement kommen vor allem Portlandzement und Calciumsulfoaluminatzement in Betracht. Des weiteren kann Calciumaluminatzement eingesetzt werden. Der Einsatz von so genannten Geopolymerzementen hat wirtschaftlich wenig Sinn. Portlandzement, auch als OPC bezeichnet, umfasst in der Regel von 50 bis 70 Gew.-% C₃S, von 10 bis 40 Gew.-% C₂S, von 0 bis 15 Gew.-% C₃A, von 0 bis 20 Gew.-% C₄AF, von 2 bis 10 Gew.-% C$·xH, von 0 bis 3 Gew.-% C und von 0 bis 5 Gew.-% Cc (CaCO₃). Die chemische Zusammensetzung ist in der Regel 55 - 75 Gew.-% CaO, 15 - 25 Gew.-% SiO₂, 2 - 6 Gew.-% Al₂O₃, 0 - 6 Gew.-% Fe₂O₃ und 1,5 - 4,5 Gew.-% SO₃. Calciumsulfoaluminatzement, auch als CSA oder C$A bezeichnet, enthält in der Regel von 10 - 75 Gew.-% C₄A₃$, von 5 - 30 Gew.-% C$, von 0 - 30 Gew.-% C₄AF, von 0 - 30 Gew.-% Calciumaluminate und von 2 - 70 Gew.-% C₂S und/oder C₅S₂$. Je nach Rohstoffmischung und Herstellungsbedingungen können gezielt Varianten erhalten werden, wie Belit-Calciumsulfoaluminatzement (kurz BCSA oder BCSAF) mit erhöhtem Belitgehalt von mindestens 10 oder 20 Gew.-% und Ternesit(Belit)-Calciumsulfoaluminatzement (kurz T(B)CSA oder T(B)CSAF) mit einem Gehalt von 5 bis über 50 Gew.-% C₅S₂$.

Es hat sich bewährt in dem Bindemittel von 1 bis 90 Gew.-%, vorzugsweise von 10 bis 70 Gew.-% und insbesondere von 20 bis 50 Gew.-% Zement und von 10 bis 99 Gew.-%, vorzugsweise von 30 bis 90 Gew.-% und insbesondere von 50 bis 80 Gew.-% erfindungsgemäßes SCM einzusetzen. Daneben enthält das Bindemittel bevorzugt bis zu 10 Gew.-%, besonders bevorzugt von 1 bis 7 Gew.-% und insbesondere von 2 bis 5 Gew.-% Sulfatträger.

Bei dem Sulfatträger handelt es sich vorzugsweise überwiegend oder ausschließlich um Calciumsulfat oder eine Mischungen von Calciumsulfaten.

Außerdem können dem Bindemittel, vorzugsweise bei der Verarbeitung, Zusatzmittel in den an sich bekannten Mengen oder im Hinblick auf die noch verblebende Ad- bzw. Absorption in diese ausgleichenden Mengen zugegeben werden.

Beispielsweise können ein oder mehrere Abbinde- und/oder Erhärtungsbeschleuniger, vorzugsweise ausgewählt unter Aluminiumsalzen und -hydroxiden, Calcium(sulfo)aluminaten, Lithiumsalzen und -hydroxiden, anderen Alkalisalzen und -hydroxiden, Alkalisilikaten und Gemischen davon, enthalten sein, insbesondere ausgewählt unter Al₂(SO)₃, AIOOH, Al(OH)₃, Al(NO₃)₃, CaAl₂O₄, Ca₁₂Al₁₄O₃₃, Ca₃Al₂O₆, Ca₄Al₆O₁₂(SO₄), LiOH, Li₂CO₃, LiCI, NaOH, Na₂CO₃, K₂Ca₂(SO₄)₃, K₃Na(SO₄)₂, Na₂Ca(SO₄)₃, K₃Na(SO₄)₂, K₂Ca(SO₄)₂•H₂O, Li₂SO₄, Na₂SO₄, K₂SO₄, KOH und Wasserglas.

Es ist weiter bevorzugt, wenn Betonverflüssiger und / oder Fließmittel und/oder Verzögerer enthalten sind. Geeignet sind beispielsweise solche auf Basis von Ligninsulfonaten; sulfoniertem Naphthalin-, Melamin- oder Phenolformaldehydkondensat; oder auf Basis von Acrylsäure-Acrylamidgemischen oder Polycarboxylatethern oder auf Basis von phosphatierten Polykondensaten; auf Basis von phosphatierten Alkylcarbonsäuren und Salzen dieser; auf Basis von (Hydroxy-)Carbonsäuren und Carboxylaten, insbesondere Citronensäure, Citraten, Weinsäure, Tartraten; Borax, Borsäure und Boraten, Oxalaten; Sulfanilsäure; Aminocarbonsäuren; Salicylsäure und Acetylsalicylsäure; Dialdehyden und Gemische davon.

Das Bindemittel kann weiterhin Zusatzstoffe, z.B. Gesteinsmehl, insbesondere Kalkstein und/oder Dolomit, gefälltes (Nano) CaCO₃, Magnesit, Pigmente, Fasern usw., enthalten. Ebenso können zusätzlich an sich bekannte SCM, insbesondere Hüttensand, Flugasche, SiO₂ in Form von Silikastaub, Mikrosilica, pyrogener Kieselsäure etc., enthalten sein. Die Menge dieser Zusätze beträgt insgesamt bevorzugt maximal 40 Gew.-%, vorzugsweise 5 bis 30 Gew.-% und besonders bevorzugt 10 bis 20 Gew.-%.

Es versteht sich, dass die Summe aller Komponenten in einer Mischung, z.B. in einem Bindemittel oder einem Ausgangsmaterial, stets 100 Gew.-% beträgt.

Es ist auch möglich, das Klinkerersatzmaterial mit einem Aktivator zu einem Zement zu kombinieren, wenn es latent-hydraulische Eigenschaften besitzt. Analog zu Hüttensand kann das Klinkerersatzmaterial bei Aktivierung seiner latent-hydraulischen Eigenschaften wie Zement hydraulisch erhärten.

Im Unterschied zu den als Roman Cement bekannten Bindemitteln zielt das erfindungsgemäße Klinkerersatzmaterial auf Aluminium- und/oder Siliziumhaltige Erhärtungsphasen. Als Aktivator sind demgemäß Aluminium und/oder Silizium freisetzende Komponenten sinnvoll, beispielsweise aber nicht ausschließlich Al₂(SO₄)₃, Al(OH)₃ und Calciumaluminate wie CA, C₃A und C₁₂A₇, und außerdem Nano- oder Microsilica, Wasserglas und Mischungen davon.

Der Aktivator oder die Aktivatoren werden in Mengen im Bereich von 0,1 bis 5 Gew.-%, vorzugsweise 0,5 bis 3 Gew.-% und besonders bevorzugt 1 bis 2 Gew.-%, bezogen auf die Menge von dem Klinkerersatzmaterial eingesetzt.

Auch bei einem solchen Bindemittel aus Klinkerersatzmaterial und Aktivator können in an sich bekannter Weise, wie oben beschrieben, Zusatzmittel und Zusatzstoffe eingesetzt werden.

Darüber hinaus kann auch bei den erfindungsgemäßen Bindemitteln enthaltend Zement und das erfindungsgemäße Klinkerersatzmaterial bei Bedarf ein Aktivator der oben beschriebenen Art und auch Menge zugefügt werden, um eine beschleunigte Reaktion zu erzielen.

Aus den Bindemitteln lassen sich Baumaterialien wie Beton, Mörtel, Estrich, bauchemische Zusammensetzungen (z.B. Fliesenkleber, ...) erhalten. Es ist ein Vorteil der Erfindung, dass erfindungsgemäß hergestelltes Klinkerersatzmaterial sehr reaktiv ist, die Baumaterialien haben vergleichbare Eigenschaften, wie solche aus Portlandzement.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung soll anhand der folgenden Beispiele erläutert werden, ohne jedoch auf die speziell beschriebenen Ausführungsformen beschränkt zu sein.

In den Beispielen wurden drei verschiedene Tone und ein Puzzolan als Aluminiumsilikat-Komponente verwendet und unter Zugabe von Dolomit und eventuell weiteren Zusätzen bei verschiedenen Temperaturen gebrannt. Zur Bestimmung der Reaktivität wurden die Produkte als SCM eingesetzt. Dazu wurden Bindemittel, die 56,5 Gew.-% Portlandzementklinker (OPC), 3,5 Gew.-% Anhydrit und 40 Gew.-% eines Klinkerersatzmaterials oder zum Vergleich 40 Gew.-% Kalkstein enthielten hergestellt und die Druckfestigkeit wurde nach 7 und 28 Tagen gemäß EN 196 bestimmt. Abweichend von der Norm wurde das Bindemittel mit einem Feinsand im Verhältnis 2:3 gemischt und es wurde ein Wasserzementwert von 0,55 verwendet. Die Messung der Druckfestigkeit erfolgte an Würfeln mit einer Kantenlänge von 20 mm und einer Vorschubgeschwindigkeit von 400 N/s. Alle Klinkerersatzmaterialien und der Kalkstein wurden mit derselben Mahlenergie gemahlen, um die Ergebnisse vergleichbar zu machen. Die Verarbeitbarkeit (Fließeigenschaften und Wasseranspruch) war bei allen Klinkerersatzmaterialien vergleichbar.

Die Ausgangsmaterialien hatten die in der folgenden Tabelle 1 angegebene Oxidzusammensetzung (GV 1050 = Glühverlust bei 1050°C) und die Oberfläche (unbehandeltes Ausgangsmaterial) nach N₂-BET:

**Tabelle 1**

| | **Anhydrit** | **Klinker** | **Kalkstein** | **Dolomit** | **Puzzolan** | **Ton 1** | **Ton 2** | **Ton 3** |
|---|---|---|---|---|---|---|---|---|
| GV 1050 | 3,68 | 0,29 | 42,57 | 46,73 | 5,37 | 7,90 | 21,42 | 12,94 |
| SiO₂ | 2,04 | 20,86 | 1,75 | 0,18 | 59,77 | 54,25 | 36,42 | 47,73 |
| Al₂O₃ | 0,60 | 4,88 | 0,46 | 0,07 | 19,62 | 19,23 | 11,08 | 28,86 |
| TiO₂ | 0,03 | 0,37 | 0,02 | 0,00 | 0,69 | 0,82 | 0,49 | 1,04 |
| MnO | 0,00 | 0,05 | 0,02 | 0,00 | 0,12 | 0,16 | 0,08 | 0,00 |
| Fe₂O₃ | 0,23 | 3,67 | 0,20 | 0,03 | 7,22 | 6,82 | 6,75 | 8,15 |
| CaO | 38,32 | 63,52 | 53,93 | 32,71 | 2,50 | 2,76 | 16,15 | 0,03 |
| MgO | 1,45 | 2,57 | 0,55 | 18,99 | 1,22 | 2,45 | 3,63 | 0,26 |
| K₂O | 0,16 | 1,09 | 0,07 | 0,01 | 1,51 | 3,18 | 1,11 | 0,49 |
| Na₂O | 0,00 | 0,55 | 0,00 | 0,00 | 1,75 | 0,83 | 0,17 | 0,02 |
| SO₃ | 52,24 | 1,22 | 0,03 | 0,00 | 0,00 | 0,48 | 0,11 | 0,00 |
| P₂O₅ | 0,02 | 0,26 | 0,04 | 0,01 | 0,07 | 0,13 | 1,55 | 0,08 |
| Summe | 98,76 | 99,34 | 99,65 | 98,74 | 99,83 | 99,00 | 98,96 | 99,60 |
| BET [m²/g] | | | | | 24,93 | 15,3 | 38,55 | 42,11 |

Die Phasenzusammensetzungen der Aluminiumsilikat-Komponenten wurden mittels Röntgendiffraktometrie (RBA) bestimmt und weitergehend mittels Thermogravimetrie (TGA) verifiziert. In Tabelle 2 sind die Ergebnisse der RBA aufgeführt. Bei dem Material "Ton 2" handelt es sich um einen mit Kalkstein verunreinigten Ton (nahezu ausschließlich Palygorskit und Kaolin vorliegend), welcher im engeren Sinne als Mergel zu klassifizieren wäre. Ein solches Material wurde schon z.B. in Tobias Danner, "Reactivity of calcined clays", ISBN 978-82-471-4553-1 verwendet.

Die Klassifizierung (Haupt- und Nebenphasen, Spuren) wurde abgeschätzt und stellt keine quantitative Bestimmung dar. Ein Großteil der Probe liegt in einer röntgenamorphen Fraktion vor. Eine genaue Quantifizierung / Phasenzusammensetzung solch komplexer Systeme ist äußert schwierig.

**Tabelle 2**

| | Puzzolan | Ton 1 | Ton 2 | Ton 3 |
|---|---|---|---|---|
| Hauptphasen | Kaolinit | Illit | Calcit | Kaolinit |
| | Anorthit | Quarz | Quarz | Quarz |
| Nebenphasen | Cristobalit | Clinochlor | Montmorillonit | Goethit |
| | Sanidin | Muscovit | Palygorskit | Montmorillonit |
| Spuren | Montmorillonit | Kaolinit | Hämatit | Illit |
| | Quarz | Montmorillonit | Kaolinit | Opal |
| | Tridymit | Albit | | |
| | Opal | Microclin | | |
| | Albit | Ankerit | | |
| | Microclin | | | |
| | Hämatit | | | |

### Beispiel 1

Als Aluminiumsilikat-Komponente geringer Qualität (sehr komplexe Mischung aus Phasen, die in deutlich verschiedenen Temperaturbereichen (600 bis 1000°C) zerstört werden) wurde Ton 1 verwendet, der bei 825°C gebrannt worden ist. Die untersuchten Klinkerersatzmaterialien und Ergebnisse listet Tabelle 3 auf.

**Tabelle 3**

| Klinkerersatzmaterial | Druckfestigkeit [MPa] nach | |
|---|---|---|
| | 7 d | 28 d |
| 100% Kalkstein (ungebrannt) | 25,1 | 31,1 |
| 50% Ton + 50% Kalkstein (nur Ton gebrannt) | 25,1 | 29,2 |
| 50% Ton + 50% Dolomit (zusammen gebrannt) | 22,6 | 34,5 |
| 66% Ton + 34% Dolomit (zusammen gebrannt) | 26,4 | 38,6 |
| 66% Ton + 34% Dolomit (getrennt gebrannt) | 22,3 | 35,5 |
| 50% Ton + 50% Dolomit + Alkali (zusammen gebrannt) | 27,5 | 39,4 |
| 66% Ton + 34% Dolomit + Alkali (zusammen gebrannt) | 27,1 | 42,3 |
| 66% Ton + 34% Dolomit (getrennt gebrannt) + Alkali im Anmachwasser | 22,4 | 31,6 |

Es wird deutlich, dass das erfindungsgemäße Verfahren aus einem Ton von sehr schlechter Qualität, Ton 1 enthält kaum Kaolinit dafür große Mengen Glimmer und Quarz, ein reaktives Klinkerersatzmaterial macht. Selbst bei der ungünstigeren Zusammensetzung (50:50) des Ausgangsmaterials wird eine 10% höhere Druckfestigkeit im Vergleich zur Referenz mit Kalkstein erreicht. In Bezug auf die im Stand der Technik vorgeschlagene Kombination aus Kalkstein und separat gebranntem Ton ist das erfindungsgemäße Klinkerersatzmaterial signifikant reaktiver (um 9 bis 32 % höhere Druckfestigkeit). Durch einen Zusatz von 1 Gew.-% NaHCO₃ als Mineralisator beim Brennen ergibt sich eine weiter optimierte Reaktivität. Dieser Effekt wird nicht erzielt, wenn man die Alkalien statt dessen dem Anmachwasser zugibt. Der Vergleich mit getrennt voneinander gebranntem Ton und Dolomit zeigt die synergistische Wirkung des gemeinsamen Brennens. Auch erschließt sich die deutliche Verbesserung gegenüber dem Einsatz des sogenannten "Roman Cement". Es zeigt sich, dass steigende Gehalte an Ton 1 (siehe Vergleich 50:50 zu 66:34) zu einer deutlichen Zunahme der Festigkeitsentwicklung führen und die Festigkeitsentwicklung somit nicht (oder zumindest nur teilweise) auf die Reaktion von gebranntem Kalk oder Dolomit zurückzuführen ist (wie im Falle von den Roman Cement). Vielmehr ist die Festigkeitsentwicklung auf den Beitrag von, zum Teil röntgenamorph vorliegenden, durch das erfindungsgemäße Verfahren erhaltenen reaktiven Klinkerphasen (z.B. C₃A, CA, C₁₂A₇, C₂S und C₄A₃$) aber auch auf eine puzzolanische Reaktion zurückzuführen. Für Ton 1 erwies sich ein Ton:Dolomit Gewichtsverhältnis von 2:1 als besonders günstig. Mit optimaler Ausgangsmaterialmischung und Mineralisatoren lässt sich erfindungsgemäß ein ansonsten als SCM nicht brauchbarer Ton sehr vorteilhaft nutzen.

### Beispiel 2

Der Einfluss der Brenntemperatur wurde untersucht, wobei jeweils 1:1 Mischungen aus Ton 1 und Dolomit mit den Gemischen von Ton 1 und Kalkstein als Stand der Technik verglichen wurden. Die Ergebnisse fasst Tabelle 4 zusammen.

**Tabelle 4**

| Klinkerersatzmaterial | Brenntemperatur | Druckfestigkeit [MPa] nach | |
|---|---|---|---|
| | | 7d | 28 d |
| 100% Kalkstein (ungebrannt) | ./. | 25,1 | 31,1 |
| 50% Ton + 50% Kalkstein (nur Ton gebrannt) | 825 °C | 25,1 | 29,2 |
| 50% Ton + 50% Dolomit (zusammen gebrannt) | 825 °C | 24,6 | 34,5 |
| 50% Ton + 50% Kalkstein (nur Ton gebrannt) | 950 °C | 23,7 | 32,4 |
| 50% Ton + 50% Dolomit (zusammen gebrannt) | 950 °C | 25,4 | 39,1 |

Diese Ergebnisse belegen, dass im Gegensatz zum Stand der Technik beim erfindungsgemäßen Verfahren die höhere Brenntemperatur nicht kritisch ist, sondern sogar zu besseren Ergebnissen führt. Des weiteren ist bei höheren Brenntemperaturen mit einer deutlichen Reduzierung des Wasseranspruches zu rechnen (siehe Beispiel 5).

### Beispiel 3

Es wurde Ton 2 untersucht, der Calcit und Quarz als kristalline Hauptphasen aufweist. Dieses Material ist, bezogen auf den(die) enthalten(en) Ton(e), als hochwertig anzusehen, da nahezu ausschließlich Palygorskit und Kaolin (Dehydroxylierung bzw. Zersetzung im vergleichbaren Temperaturbereich) vorliegen. Aufgrund des hohen Anteils an CaCO₃ ist der Ton 2 eigentlich als Mergel zu bezeichnen. In diesem Beispiel wurde ebenfalls die Brenntemperatur variiert. Die untersuchten Klinkerersatzmaterialien und Ergebnisse sind in Tabelle 5 zusammengestellt.

**Tabelle 5**

| Klinkerersatzmaterial | Brenntem peratur | Druckfestigkeit [MPa] nach | |
|---|---|---|---|
| | | 7d | 28 d |
| 100% Ton (gebrannt) | 825 °C | 26,8 | 46,1 |
| 50% Ton + 50% Kalkstein (nur Ton gebrannt) | 825 °C | 26,6 | 45,0 |
| 50% Ton + 50% Dolomit (zusammen gebrannt) | 825 °C | 33,9 | 53,5 |
| 50% Ton + 50% Dolomit (getrennt gebrannt) | 825 °C | 25,3 | 41,2 |
| 100% Ton (gebrannt) | 950 °C | 19,6 | 27,7 |
| 50% Ton + 50% Kalkstein (nur Ton gebrannt) | 950 °C | 22,8 | 32,9 |
| 50% Ton + 50% Dolomit (zusammen gebrannt) | 950 °C | 31,0 | 47,3 |
| 50% Ton + 50% Dolomit (getrennt gebrannt) | 950 °C | 23,1 | 34,6 |

Die Versuche demonstrieren die Unempfindlichkeit des erfindungsgemäßen Verfahrens gegenüber verschiedenen Brenntemperaturen, im Gegensatz zum Brennen von reinem Ton 2 (Stand der Technik). Weiter bestätigt sich, dass im Vergleich zu den Ton-Kalkstein-Gemischen, wie sie z.B. bei Danner, "Reactivity of Calcined Clays" beschrieben sind, eine erhöhte Reaktivität erreicht wurde. Erwähnenswert ist ebenfalls die beschleunigte Reaktion der Kompositbindemittel für das erfindungsgemäße SCM, was sehr deutlich an den 7d Druckfestigkeiten zu sehen ist. Es zeigt sich, dass auch ein an sich schon hochwertiges Material im Vergleich zum Stand der Technik noch verbessert werden kann.

### Beispiel 4

Es wurde Ton 3 untersucht, der Kaolin und Quarz als kristalline Hauptphasen aufweist. Dieses Material ist, bezogen auf den(die) enthalten(en) Ton(e), als hochwertig anzusehen, da nahezu ausschließlich Kaolin und nur wenig Illit und Montmorillonit vorliegen. In diesem Beispiel wurde ebenfalls die Brenntemperatur variiert. Die untersuchten Klinkerersatzmaterialien und Ergebnisse sind in der Tabelle 6 zusammengestellt.

**Tabelle 6**

| Klinkerersatzmaterial | Brenntem peratur | Druckfestigkeit [MPa] nach | |
|---|---|---|---|
| | | 7d | 28 d |
| 100% Ton (gebrannt) | 825 °C | 30,5 | 45,0 |
| 50% Ton + 50% Kalkstein (nur Ton gebrannt) | 825 °C | 38,5 | 51,8 |
| 50% Ton + 50% Dolomit (zusammen gebrannt) | 825 °C | 48,2 | 55,5 |
| 100% Ton (gebrannt) | 950 °C | 21,8 | 39,6 |
| 50% Ton + 50% Dolomit (zusammen gebrannt) | 950 °C | 41,7 | 56,1 |

Die Versuche demonstrieren die Unempfindlichkeit des erfindungsgemäßen Verfahrens gegenüber verschiedenen Brenntemperaturen, im Gegensatz zum Brennen von reinem Ton 3 (Stand der Technik). Erwähnenswert ist ebenfalls die beschleunigte Reaktion der Kompositbindemittel für das erfindungsgemäße SCM, was sehr deutlich an den 7d Druckfestigkeiten zu sehen ist. Es zeigt sich, dass auch ein an sich schon hochwertiges Material im Vergleich zum Stand der Technik noch verbessert werden kann.

### Beispiel 5

Die Auswirkung des erfindungsgemäßen Verfahrens auf ein als Klinkerersatzmaterial ungeeignetes puzzolanisches Material von geringer Qualität wurde untersucht. Das Puzzolan (Puzzo.) ist als ein Material geringerer Qualität anzusehen, da es eine sehr komplexe Mischung aus Phasen, welche in deutlich verschiedenen Temperaturbereichen zerstört werden, aufweist. Auch hierbei wurde die Brenntemperatur variiert. Die Ergebnisse zeigt Tabelle 7.

**Tabelle 7**

| Klinkerersatzmaterial | Brenntem peratur | Druckfestig keit [MPa] nach | |
|---|---|---|---|
| | | 7d | 28d |
| 50 Gew.-% Puzzolan + 50 Gew.-% Kalkstein | ./. | 23,7 | 31,8 |
| 50% Puzzo. + 50% Kalkstein (nur Puzzo. gebrannt) | 825 °C | 26,5 | 39,7 |
| 100 Gew.-% Puzzo. (gebrannt) | 825 °C | 23,4 | 39,6 |
| 50% Puzzo. + 50% Dolomit (zusammen gebrannt) | 825 °C | 32,0 | 45,0 |
| 66% Puzzo. + 34% Dolomit (zusammen gebrannt) | 825 °C | 33,4 | 49,9 |
| 66% Puzzo. + 34% Dolomit (getrennt gebrannt) | 825 °C | 32,1 | 43,8 |
| 50% Puzzo. + 50% Kalkstein (nur Puzzo. gebrannt) | 950 °C | 24,4 | 34,9 |
| 100 Gew.-% Puzzo. (gebrannt) | 950 °C | 20,2 | 32,9 |
| 50% Puzzo. + 50% Dolomit (zusammen gebrannt) | 950 °C | 27,1 | 38,4 |
| 50% Puzzo. + 50% Dolomit (getrennt gebrannt) | 950 °C | 24,8 | 34,7 |

Das ungebrannte Puzzolan zeigt keinen Beitrag zur Entwicklung der Druckfestigkeit nach 28d. Das Puzzolan alleine reagiert außerdem sehr deutlich auf die Höhe der Brenntemperatur. Bei einer Erhöhung von 825°C auf 950°C erzeugt das Material nahezu den gleichen Festigkeitsbeitrag wie das unbehandelte Puzzolan (vergleichbar der Referenz 100% Kalkstein). Um alles vorhandene Material umzusetzen und um eine möglichst niedrige Oberfläche und somit einen geringen Wasseranspruch zu erreichen sowie die Zerstörung von im Bindemittel unerwünschten Phasen, wie quellfähigen Tonen (z.B. Montmorillonit), sind aber hohe Temperaturen von Nöten. Das erfindungsgemäße Klinkerersatzmaterial ist jeweils reaktiver als das vergleichbare Puzzolan-Kalkstein-Gemisch gemäß dem Stand der Technik und auch bei hohen Temperaturen erhält man mit dem erfindungsgemäßen Verfahren ein reaktives SCM. Der Vergleich mit getrennt voneinander gebranntem Puzzolan und Dolomit zeigt deutlich die synergistische Wirkung des gemeinsamen Brennens.

### Beispiel 6

Um den Einfluss der Brenntemperatur auf die Oberflächengröße verschiedener Tone aufzuzeigen, wurde die spezifische Oberfläche mittels Gasabsorption und Desorption (BET) vor und nach dem Brennen bestimmt. Für die tonigen, puzzolanischen Ausgangsmaterialien ergeben sich die in Tabelle 8 zusammengefassten Ergebnisse:

**Tabelle 8**

| Ton | BET Oberfläche in m²/g | | | | |
|---|---|---|---|---|---|
| | vor dem Brennen | 525°C | 700 °C | 825 °C | 950 °C |
| Puzzolan | 24,9 | - | 15,6 | 13,5 | 7,1 |
| Ton 1 | 15,3 | 14,6 | 14,5 | 6,4 | 1,8 |
| Ton 2 | 38,6 | 29.3 | 26.2 | 9,4 | 1,9 |
| Ton 3 | 42,1 | 41,4 | 41,8 | 31,5 | 24,1 |

Es wird deutlich, dass im Hinblick auf eine möglichst geringe Oberfläche die Brenntemperatur möglichst hoch sein sollte. Eine niedrige Oberfläche ist vorteilhaft, weil damit der Wasseranspruch geringer wird und auch die Absorption von Zusatzmitteln verhindert oder wenigstens verringert wird. Nach dem Stand der Technik führt eine hohe Brenntemperatur jedoch zu einem Material, welches nur noch bedingt als SCM verwendet werden kann wie aus den Beispielen 1 bis 4 zu entnehmen ist. Wie in den vorangegangenen Beispielen gezeigt, ist es erfindungsgemäß möglich die Brenntemperatur zu erhöhen, ohne dass die Reaktivität als SCM verloren geht. Dadurch kann die Oberfläche stärker als nach dem Stand der Technik verringert werden, als auch bei manchen Tonen eine höherer Anteil umgesetzt werden, so dass die Reaktivität steigt.

### Beispiel 7

Die Umsetzung von Ton mit Dolomit wurde mit der von Ton mit Ca(OH)₂ + Mg(OH)₂ als Einzelkomponenten verglichen. 2 Gewichtsteilen puzzolanischem Material wurde dazu einerseits 1 Teil Dolomit und andererseits so viel eines Gemisches von Ca(OH)₂ und Mg(OH)₂ zugefügt, dass nach dem Brennprozess die gleiche chemische Zusammensetzung erhalten wurde, wie bei der Umsetzung mit Dolomit. Wiederum wurde bei zwei verschiedenen Temperaturen gebrannt. Die Ergebnisse fasst Tabelle 9 zusammen.

**Tabelle 9**

| Klinkerersatzmaterial | Brenntemperatur | Druckfestigkeit [MPa] nach | |
|---|---|---|---|
| | | 7d | 28d |
| Puzzo. + Dolomit | 825 °C | 33,4 | 49,9 |
| Puzzo. + Ca(OH)₂ + Mg(OH)₂ | 825 °C | 28,8 | 42,3 |
| Puzzo. + Dolomit | 950 °C | 28,8 | 43,6 |
| Puzzo. + Ca(OH)₂ + Mg(OH)₂ | 950°C | 22,8 | 32,8 |

Es wird deutlich, dass es von entscheidender Bedeutung ist, in welcher Form das MgO vor dem Brennen gebunden war. In beiden Fällen ist das erfindungsgemäß produzierte Klinkerersatzmaterial mit Dolomit als MgO-Quelle reaktiver als das mit Calcium- und Magnesiumhydroxid als MgO-Quelle.

## Patentansprüche

1. Verfahren zur Herstellung eines Klinkerersatzmaterials umfassend die Schritte:
- Bereitstellen eines Ausgangsmaterials enthaltend eine Aluminiumsilikat-Komponente und eine Dolomit-Komponente, wobei das Gewichtsverhältnis Al₂O₃+SiO₂ zu MgO+CaO des Ausgangsmaterials im Bereich von 0,7 bis 6 liegt,
- Umsetzen des Ausgangsmaterials zu dem Klinkerersatzmaterial durch Brennen des Ausgangsmaterials zu einem Sinterprodukt im Temperaturbereich von 850 °C bis 1100 °C, wenn keine Mineralisatoren enthalten sind, und im Temperaturbereich von 725 °C bis 950°C, wenn Mineralisatoren enthalten sind.

2. Verfahren gemäß Anspruch 1, **dadurch gekennzeichnet, dass** das Ausgangsmaterial durch Mischen und gemeinsames Vermahlen von Dolomit-Komponente und Aluminiumsilikat-Komponente erhalten wird.

3. Verfahren gemäß Anspruch 2, **dadurch gekennzeichnet, dass** vor oder bei dem Vermahlen ein oder mehrere Mahlhilfsmittel zugefügt werden, die vorzugsweise ausgewählt sind aus der Gruppe bestehend aus Glykole, Alkanolaminen, Alkyldialkanolaminen und Gemischen davon.

4. Verfahren gemäß einem der Ansprüche 1 bis 3, **dadurch gekennzeichnet, dass** als Ausgangsmaterial eine Mischung enthaltend 40 bis 80 Gew.-% Aluminiumsilikat-Komponente, vorzugsweise 50 bis 70 Gew.-% Aluminiumsilikat-Komponente und insbesondere 55 bis 65 Gew.-% Aluminiumsilikat-Komponente und 20 bis 60 Gew.-% Dolomit-Komponente, vorzugsweise 30 bis 50 Gew.-% Dolomit-Komponente und insbesondere 35 bis 45 Gew.-% Dolomit-Komponente verwendet wird.

5. Verfahren gemäß einem der Ansprüche 1 bis 4, **dadurch gekennzeichnet, dass** das Ausgangsmaterial, glühverlustfrei gerechnet, mindestens 10 Gew.-% MgO, vorzugsweise mindestens 12 Gew.-% MgO, als Karbonat vorliegend, enthält.

6. Verfahren gemäß einem der Ansprüche 1 bis 5, **dadurch gekennzeichnet, dass** das Ausgangsmaterial, glühverlustfrei gerechnet, mindestens 15 Gew.-% Al₂O₃, vorzugsweise mindestens 20 Gew.-% Al₂O₃, enthält.

7. Verfahren gemäß einem der Ansprüche 1 bis 6, **dadurch gekennzeichnet, dass** das Ausgangsmaterial, glühverlustfrei gerechnet, mindestens 15 Gew.-% SiO₂, vorzugsweise mindestens 25 Gew.-% SiO₂, und insbesondere mindestens 40 Gew.-% SiO₂, enthält.

8. Verfahren gemäß einem der Ansprüche 1 bis 7, **dadurch gekennzeichnet, dass** das Ausgangsmaterial für 5 bis 240 Minuten, bevorzugt für 25 bis 120 Minuten und insbesondere für 40 bis 75 Minuten gebrannt wird.

9. Verfahren gemäß einem der Ansprüche 1 bis 7, **dadurch gekennzeichnet, dass** das Ausgangsmaterial in einem Fließbett- oder Wirbelschichtreaktor oder einem Flash Calciner für 5 bis 300 Sekunden, bevorzugt für 10 bis 150 Sekunden und insbesondere für 20 bis 100 Sekunden gebrannt wird.

10. Verfahren gemäß einem der Ansprüche 1 bis 9, **dadurch gekennzeichnet, dass** das Klinkerersatzmaterial auf eine Feinheit von 2000 bis 10000 cm²/g (Blaine), vorzugsweise von 3500 bis 8000 cm²/g, und besonders bevorzugt von 4000 bis 7000 cm²/g, gemahlen wird.

11. Verfahren gemäß Anspruch 10, **dadurch gekennzeichnet, dass** vor oder bei dem Mahlen ein oder mehrere Mahlhilfsmittel zugefügt werden, die vorzugsweise ausgewählt sind aus der Gruppe bestehend aus Glykolen, Alkanolaminen, Alkyldialkanolaminen und Gemischen davon.

12. Verfahren gemäß mindestens einem der Ansprüche 1 bis 11, **dadurch gekennzeichnet, dass** das Ausgangsmaterial keine Mineralisatoren enthält und bei 850 °C bis 1000 °C, bevorzugt bei 850 °C bis 975 °C, gebrannt wird.

13. Verfahren gemäß mindestens einem der Ansprüche 1 bis 11 **dadurch gekennzeichnet, dass** das Ausgangsmaterial einen oder mehrere Mineralisatoren enthält und bei 725 °C bis 950 °C, vorzugsweise bei 775 °C bis 900 °C, insbesondere bei 800 °C bis 875 °C, gebrannt wird.

14. Verfahren gemäß Anspruch 13, **dadurch gekennzeichnet, dass** der oder die Mineralisatoren ausgewählt sind aus der Gruppe bestehend aus Borax, Glasabfällen, Eisensalzen, Alkalisalzen und Erdalkalisalzen.

15. Bindemittel umfassend
- mindestens einen Zement, der ausgewählt ist unter Portlandzement, Calciumsulfoaluminatzement und Calciumaluminatzement, und
- ein gemahlenes Klinkerersatzmaterial, erhältlich gemäß einem der Ansprüche 1 bis 14.

16. Bindemittel gemäß Anspruch 15, **dadurch gekennzeichnet, dass** es von 1 bis 90 Gew.-%, vorzugsweise von 10 bis 70 Gew.-% und insbesondere von 20 bis 50 Gew.-% Zement und von 10 bis 99 Gew.-%, vorzugsweise von 30 bis 90 Gew.-% und insbesondere von 50 bis 80 Gew.-% Klinkerersatzmaterial enthält.

17. Bindemittel gemäß Anspruch 15 oder 16, **dadurch gekennzeichnet, dass** es einen zusätzlichen Sulfatträger enthält.

18. Bindemittel gemäß Anspruch 17, **dadurch gekennzeichnet, dass** es von 0,1 bis 10 Gew.-%, bevorzugt von 1 bis 7 Gew.-% und insbesondere von 2 bis 5 Gew.-% Calciumsulfat oder eine Mischung von Calciumsulfaten enthält.

19. Bindemittel gemäß einem der Ansprüche 15 bis 18, **dadurch gekennzeichnet, dass** ein oder mehrere Abbinde- und/oder Erhärtungsbeschleuniger, vorzugsweise ausgewählt unter Aluminiumsalzen und -hydroxiden, Calcium(sulfo)aluminaten, Lithiumsalzen und -hydroxiden, anderen Alkalisalzen und -hydroxiden, Alkalisilikaten und Gemischen davon, enthalten sind, insbesondere ausgewählt unter Al₂(SO)₃, AIOOH, Al(OH)₃, Al(NO₃)₃, CaAl₂O₄, Ca₁₂Al₁₄O₃₃, Ca₃Al₂O₆, Ca₄Al₆O₁₂(SO₄), LiOH, Li₂CO₃, LiCI, NaOH, Na₂CO₃, K₂Ca₂(SO₄)₃, K₃Na(SO₄)₂, Na₂Ca(SO₄)₃, K₃Na(SO₄)₂, K₂Ca(SO₄)₂•H₂O, Li₂SO₄, Na₂SO₄, K₂SO₄, KOH, Nano- und Microsilica, Wasserglas und Mischungen davon.

20. Bindemittel gemäß einem der Ansprüche 15 bis 19, **dadurch gekennzeichnet, dass** ein oder mehrere Aktivatoren enthalten sind, vorzugsweise in einer Menge von 0,1 bis 5 Gew.-%, insbesondere von 0,5 bis 3 Gew.-% und besonders bevorzugt von 1 bis 2 Gew.-%, bezogen auf die Menge des Klinkerersatzmaterials.

21. Bindemittel gemäß einem der Ansprüche 15 bis 20, **dadurch gekennzeichnet, dass** Betonverflüssiger und / oder Fließmittel und / oder Verzögerer enthalten sind, vorzugsweise auf Basis von Ligninsulfonaten; sulfoniertem Naphthalin-, Melamin- oder Phenolformaldehydkondensat; oder auf Basis von Acrylsäure-Acrylamidgemischen oder Polycarboxylatethern oder auf Basis von phosphatierten Polykondensaten; phosphatierten Alkylcarbonsäuren und Salzen dieser; (Hydroxy-)Carbonsäuren und Carboxylaten, insbesondere Citronensäure, Citrate, Weinsäure, Tartrate; Borax, Borsäure und Borate, Oxalate; Sulfanilsäure; Aminocarbonsäuren; Salicylsäure und Acetylsalicylsäure; Dialdehyde und Gemische davon, enthalten sind.

22. Bindemittel gemäß mindestens einem der Ansprüche 15 bis 21, **dadurch gekennzeichnet, dass** Zusatzstoffe, z.B. Gesteinsmehl, insbesondere Kalkstein und/oder Dolomit, gefälltes (Nano)CaCO₃, Pigmente, Fasern und Mischungen von zwei oder mehr davon, enthalten sind, vorzugsweise in einem Anteil von maximal 40 Gew.-%, besonders bevorzugt von 5 bis 30 Gew.-% und insbesondere von 10 bis 20 Gew.-%.

23. Bindemittel gemäß mindestens einem der Ansprüche 15 bis 22, **dadurch gekennzeichnet, dass** zusätzlich Hüttensand, Flugasche, SiO₂ in Form von Silikastaub, Microsilica, und/oder pyrogener Kieselsäure enthalten ist/sind, vorzugsweise in einem Anteil von maximal 40 Gew.-%, besonders bevorzugt von 5 bis 30 Gew.-% und insbesondere von 10 bis 20 Gew.-%.

## Claims

1. A method for producing a supplementary cementitious material, comprising the steps:
- Provision of a starting material containing an aluminium silicate constituent and a dolomite constituent, wherein the weight ratio of Al₂O₃+SiO₂ to MgO+CaO of the starting material is in the range of 0.7 to 6,
- Conversion of the starting material to the supplementary cementitious material by burning the starting material to a sintered product in the temperature range of 850 °C to 1100 °C if no mineralizers are contained, and in the temperature range of 725 °C to 950°C if mineralizers are contained.

2. The method according to claim 1, **characterized in that** the starting material is obtained by mixing and combined grinding of dolomite constituents and aluminium silicate constituents.

3. The method according to claim 2, **characterized in that** before or during the grinding, one or several grinding aids are added, which are preferably chosen from the group of glycols, alkanolamines, alkyl dialkanolamines, and mixtures thereof.

4. The method according to one of claims 1 to 3, **characterized in that** a mixture containing 40 to 80 wt % aluminium silicate constituent, preferably 50 to 70 wt % aluminium silicate constituent, and in particular 55 to 65 wt % aluminium silicate constituent and 20 to 60 wt % dolomite constituent, preferably 30 to 50 wt % dolomite constituent, and in particular 35 to 45 wt % dolomite constituent is used as a starting material.

5. The method according to one of claims 1 to 4, **characterized in that** the starting material, calculated on a loss on ignition-free basis, contains at least 10 wt % MgO, preferably at least 12 wt % MgO, occurrng as carbonate.

6. The method according to one of claims 1 to 5, **characterized in that** the starting material, calculated on a loss on ignition-free basis, contains at least 15 wt % Al₂O₃, preferably at least 20 wt % Al₂O₃.

7. The method according to one of claims 1 to 6, **characterized in that** the starting material, calculated on a loss on ignition-free basis, contains at least 15 wt % SiO₂, preferably at least 25 wt % SiO₂, and in particular at least 40 wt % SiO₂.

8. The method according to one of claims 1 to 7, **characterized in that** the starting material is burned for 5 to 240 minutes, preferably for 25 to 120 minutes, and in particular for 40 to 75 minutes.

9. The method according to one of claims 1 to 7, **characterized in that** the starting material is burned in a fluidized-bed reactor or in a flash calciner for 5 to 300 seconds, preferably for 10 to 150 seconds, and in particular for 20 to 100 seconds.

10. The method according to one of claims 1 to 9, **characterized in that** the supplementary cementitious material is ground to a fineness of 2000 to 10,000 cm²/g (Blaine), preferably 3500 to 8000 cm²/g, and particularly preferably 4000 to 7000 cm²/g.

11. The method according to claim 10, **characterized in that** before or during grinding, one or several grinding aids are added, which are preferably chosen from the group of glycols, alkanolamines, alkyl dialkanolamines, and mixtures thereof.

12. The method according to at least one of claims 1 to 11, **characterized in that** the starting material does not contain any mineralizers and is burned at 825 °C to 1000 °C, preferably at 850 °C to 975 °C.

13. The method according to at least one of claims 1 to 11, **characterized in that** the starting material contains one or several mineralizers and is burned at 725 °C to 950 °C, preferably at 775 °C to 900 °C, in particular at 800 °C to 875 °C.

14. The method according to claim 13, **characterized in that** the mineralizer or mineralizers is/are chosen from the group of borax, waste glass, iron salts, alkaline salts and alkaline earth salts.

15. A binder comprising
- at least one cement, which is selected from Portland cement, calcium sulphoaluminate cement, and calcium aluminate cement, and
- a ground supplementary cementitious material, which can be obtained according to one of claims 1 to 14.

16. The binder according to claim 15, **characterized in that** it contains from 1 to 90 wt %, preferably from 10 to 70 wt %, and in particular from 20 to 50 wt % cement and from 10 to 99 wt %, preferably from 30 to 90 wt %, and in particular from 50 to 80 wt % supplementary cementitious material.

17. The binder according to claim 15 or 16, **characterized in that** it contains an additional sulphate carrier.

18. The binder according to claim 17, **characterized in that** it contains from 0.1 to 10 wt %, preferably from 1 to 7 wt %, and in particular from 2 to 5 wt % calcium sulphate or a mixture of calcium sulphates.

19. The binder according to one of claims 15 to 18, **characterized in that** one or several setting and/or hardening accelerators, preferably chosen from aluminium salts and aluminium hydroxides, calcium (sulpho)aluminates, lithium salts and lithium hydroxides, other alkaline salts and alkaline hydroxides, alkaline silicates, and mixtures thereof are contained, in particular selected from Al₂(SO)₃, AIOOH, Al(OH)₃, Al(NO₃)₃, CaAl₂O₄, Ca₁₂Al₁₄O₃₃, Ca₃Al₂O₅, Ca₄Al₆O₁₂(SO₄), LiOH, Li₂CO₃, LiCl, NaOH, Na₂CO₃, K₂Ca₂(SO₄)₃, K₃Na(SO₄)₂, Na₂Ca(SO₄)₃, K₃Na(SO₄)₂, K₂Ca(SO₄)₂•H₂O, Li₂SO₄, Na₂SO₄, K₂SO₄, KOH, nano- and microsilica, water glass, and mixtures thereof.

20. The binder according to one of claims 15 to 19, **characterized in that** one or several activators are contained, preferably in an amount of 0.1 to 5 wt %, in particular 0.5 to 3 wt %, and particularly preferred 1 to 2 wt %, based on the amount of the supplementary cementitious material.

21. The binder according to one of claims 15 to 20, **characterized in that** concrete plasticizers and/or water reducing agents and/or retarders are contained, which are preferably based on lignin sulphonates; sulphonated naphthalene, melamine, or phenol formaldehyde condensate; or based on acrylic acid-acryl amide mixtures or polycarboxylate ethers, or based on phosphated polycondensates phosphated alkyl carboxylic acids and salts thereof; (hydroxy-) carboxylic acids and carboxylates, in particular citric acid, citrates, tartaric acid, tartrates; borax, boric acid and borates, oxalates; sulphanilic acid; amino-carbonic acids; salicylic acid, and acetylsalicylic acid; dialdehydes and mixtures thereof.

22. The binder according to at least one of claims 15 to 21, **characterized in that** additives, e.g., rock flour, in particular limestone and/or dolomite, precipitated (nano) CaCO₃, pigments, fibres, and mixtures of two or more thereof are contained, preferably in an amount of up to 40 wt %, particularly preferably 5 to 30 wt %, and in particular 10 to 20 wt %.

23. The binder according to at least one of claims 15 to 22, **characterized in that** in addition, granulated blast furnace slag, fly ash, SiO₂ in the form of silica fume, microsilica, and/or pyrogenic silica is/are contained, preferably in an amount of up to 40 wt %, particularly preferably 5 to 30 wt %, and in particular 10 to 20 wt %.

## Revendications

1. Procédé pour la production d'un matériau de remplacement de clinker comprenant les étapes dans lesquelles:
- on procure un matériau de départ contenant un composant à base de silicate d'aluminium et un composant à base de dolomite; dans lequel le rapport pondéral du Al₂O₃+SiO₂ au MgO+CaO du matériau de départ se situe dans la plage de 0,7 à 6;
- on fait réagir le matériau de départ pour obtenir le matériau de remplacement de clinker par l'intermédiaire d'une calcination du matériau de départ afin d'obtenir un produit fritté, dans la plage de températures de 850 °C à 1100 °C, lorsqu'il ne contient pas de minéralisateur, et dans la plage de températures de 725 °C à 950 °C lorsqu'il contient des minéralisateurs.

2. Procédé selon la revendication 1, **caractérisé en ce que** l'on obtient le matériau de départ par mélange et broyage conjoints d'un composant à base de dolomite et d'un composant à base de silicate d'aluminium.

3. Procédé selon la revendication 2, **caractérisé en ce que**, avant le broyage ou au cours de ce dernier, on ajoute un ou plusieurs adjuvants de broyage qui sont choisis de préférence parmi le groupe constitué par des glycols, des alcanolamines, des alkyldialcanolamines, ainsi que leurs mélanges.

4. Procédé selon l'une quelconque des revendications 1 à 3, **caractérisé en ce que** l'on utilise, à titre de matériau de départ, un mélange contenant de 40 à 80 % en poids d'un composant à base de silicate d'aluminium, de préférence de 50 à 70 % en poids d'un composant à base de silicate d'aluminium, et en particulier de 55 à 65 % en poids d'un composant à base de silicate d'aluminium, et de 20 à 60 % en poids d'un composant à base de dolomite, de préférence de 30 à 50 % en poids d'un composant à base de dolomite, et en particulier de 35 à 45 % en poids d'un composant à base de dolomite.

5. Procédé selon l'une quelconque des revendications 1 à 4, **caractérisé en ce que** le matériau de départ contient, calculé en l'absence de perte au feu, au moins 10 % en poids de MgO, de préférence au moins 12 % en poids de MgO, présent sous la forme de carbonate.

6. Procédé selon l'une quelconque des revendications 1 à 5, **caractérisé en ce que** le matériau de départ contient, calculé en l'absence de perte au feu, au moins 15 % en poids de Al₂O₃, de préférence au moins 20 % en poids de Al₂O₃.

7. Procédé selon l'une quelconque des revendications 1 à 6, **caractérisé en ce que** le matériau de départ contient, calculé en l'absence de perte au feu, au moins 15 % en poids de SiO₂, de préférence au moins 25 % en poids de SiO₂, et en particulier au moins 40 % en poids de SiO₂.

8. Procédé selon l'une quelconque des revendications 1 à 7, **caractérisé en ce que** l'on calcine le matériau de départ pendant 5 à 240 minutes, de préférence pendant 25 à 120 minutes, et en particulier pendant 40 à 75 minutes.

9. Procédé selon l'une quelconque des revendications 1 à 7, **caractérisé en ce que** l'on calcine le matériau de départ dans un réacteur du type à lit fluidisé ou à couche tourbillonnaire ou dans un four de calcination éclair pendant 5 à 300 secondes, de préférence pendant 10 à 150 secondes, et en particulier pendant 20 à 100 secondes.

10. Procédé selon l'une quelconque des revendications 1 à 9, **caractérisé en ce que** l'on broie le matériau de remplacement de clinker pour obtenir une finesse de 2.000 à 10.000 cm²/g (Blaine), de préférence de 3.500 à 8.000 cm²/g, et de manière particulièrement préférée de 4.000 à 7.000 cm²/g.

11. Procédé selon la revendication 10, **caractérisé en ce que** l'on ajoute, avant le broyage ou au cours de ce dernier, un ou plusieurs adjuvants de broyage qui sont choisis de préférence parmi le groupe constitué par des glycols, des alcanolamines, des alkyldialcanolamines, ainsi que leurs mélanges.

12. Procédé selon au moins une des revendications 1 à 11, **caractérisé en ce que** le matériau de départ ne contient aucun minéralisateur et est calciné à une température de 850 °C à 1.000 °C, de préférence de 850 °C à 975 °C.

13. Procédé selon au moins une des revendications 1 à 11, **caractérisé en ce que** le matériau de départ contient un ou plusieurs minéralisateurs et est calciné à une température de 725 °C à 950 °C, de préférence de 775 °C à 900 °C, en particulier de 800 °C à 875 °C.

14. Procédé selon la revendication 13, **caractérisé en ce que** le ou les minéralisateur(s) est/sont choisis parmi le groupe constitué par le borax, des déchets de verre, des sels de fer, des sels d'alcalin et des sels d'alcalinoterreux.

15. Liant comprenant:
- au moins un ciment qui est choisi parmi le ciment Portland, un ciment à base de sulfoaluminate de calcium et un ciment à base d'aluminate de calcium; et
- un matériau de remplacement de clinker broyé que l'on obtient conformément à l'une quelconque des revendications 1 à 14.

16. Liant selon la revendication 15, **caractérisé en ce qu'**il contient de 1 à 90 % en poids, de préférence de 10 à 70 % en poids, et en particulier de 20 à 50 % en poids de ciment et de 10 à 99 % en poids, de préférence de 30 à 90 % en poids, et en particulier de 50 à 80 % en poids d'un matériau de remplacement de clinker.

17. Liant selon la revendication 15 ou 16, **caractérisé en ce qu'**il contient un porteur de sulfate supplémentaire.

18. Liant selon la revendication 17, **caractérisé en ce qu'**il contient de 0,1 à 10 % en poids, de préférence de 1 à 7 % en poids, et en particulier de 2 à 5 % en poids de sulfate de calcium ou un mélange de sulfates de calcium.

19. Liant selon l'une quelconque des revendications 15 à 18, **caractérisé en ce qu'**il contient un ou plusieurs accélérateurs de la prise et/ou du durcissement, choisis de préférence parmi des sels et des hydroxydes d'aluminium, des (sulfo)aluminates de calcium, des sels et des hydroxydes de lithium, d'autres sels et hydroxydes de métaux alcalins, des silicates de métaux alcalins ainsi que leurs mélanges, choisis en particulier parmi du Al₂(SO)₃, du AIOOH, du AI(OH)3, du Al(NO₃)₃, du CaAl₂O₄, du Ca₁₂Al₁₄O₃₃, du Ca₃Al₂O₆, du Ca₄Al₆O₁₂(SO₄), du LiOH, du Li₂CO₃, du LiCI, du NaOH, du Na₂CO₃, du K₂Ca₂(SO₄)₃, du K₃Na(SO₄)₂, du Na₂Ca(SO₄)₃, du K₃Na(SO₄)₂, du K₂Ca(SO₄)₂·H₂O, du Li₂SO₄, du Na₂SO₄, du K₂SO₄, du KOH, de la nano- et microsilice, du silicate de sodium, ainsi que leurs mélanges.

20. Liant selon l'une quelconque des revendications 15 à 19, **caractérisé en ce qu'**il contient un ou plusieurs activateurs, de préférence en une quantité de 0,1 à 5 % en poids, en particulier de 0,5 à 3 % en poids et de manière particulièrement préférée de 1 à 2 % en poids, rapportés à la quantité du matériau de remplacement de clinker.

21. Liant selon l'une quelconque des revendications 15 à 20, **caractérisé en ce qu'**il contient des fluidifiants du béton et/ou des agents d'écoulement et/ou des ralentisseurs, de préférence à base de sulfonates de lignine; d'un condensat sulfoné de naphtalène, de mélamine ou de phénolformaldéhyde; ou à base de mélanges d'acide acrylique-acrylamide ou d'éthers polycarboxyliques; ou à base de polycondensats phosphatés; d'acides alkylcarboxyliques phosphatés et de sels de ces derniers; d'acides (hydroxy)carboxyliques et de carboxylates, en particulier l'acide citrique, des citrates, l'acide tartrique, des tartrates; le borax, l'acide borique et des borates, des oxalates; l'acide sulfanilique; des acides aminocarboxyliques; l'acide salicylique et l'acide acétylsalicylique; des dialdéhydes et leurs mélanges.

22. Liant selon au moins une des revendications 15 à 21, **caractérisé en ce qu'**il contient des additifs, par exemple de la poudre de roche, en particulier du calcaire et/ou de la dolomite, du (nano)CaCO₃ précipité, des pigments, des fibres, et des mélanges de deux d'entre eux ou plus, de préférence en une fraction maximale de 40 % en poids, de manière particulièrement préférée de 5 à 30 % en poids, et en particulier de 10 à 20 % en poids.

23. Liant selon au moins une des revendications 15 à 22, **caractérisé en ce qu'**il contient en outre du laitier de haut-fourneau, des cendres volantes, du SiO₂ sous la forme de silice micronisée, de la microsilice et/ou de l'acide silicique pyrogéné, de préférence en une fraction maximale de 40 % en poids, de manière particulièrement préférée de 5 à 30 % en poids, et en particulier de 10 à 20 % en poids.
